(19) Europäisches Patentamt
European Patent Office
Office européen des brevets

(11) **EP 1 543 369 B1**

(12) **EUROPÄISCHE PATENTSCHRIFT**

(45) Veröffentlichungstag und Bekanntmachung des Hinweises auf die Patenterteilung:
**08.03.2006  Patentblatt 2006/10**

(51) Int Cl.:
*G02B 21/24* (2006.01)     *G02B 7/32* (2006.01)

(21) Anmeldenummer: 03750650.8

(22) Anmeldetag: **25.09.2003**

(86) Internationale Anmeldenummer:
**PCT/EP2003/010784**

(87) Internationale Veröffentlichungsnummer:
**WO 2004/031830 (15.04.2004 Gazette 2004/16)**

(54) **AUTOFOKUS-EINRICHTUNG UND VERFAHREN ZUR OPTISCHEN UNTERSUCHUNG ODER/UND ERFASSUNG VON SCHICHTEN**

DEVICE AND METHOD FOR OPTICAL OBJECT EXAMINATION AND/OR DETECTION AND/OR EXAMINATION OF LAYERS

DISPOSITIF ET PROCEDE POUR L'ANALYSE OPTIQUE D'OBJET OU POUR LA DETECTION OU L'ANALYSE DE COUCHES

(84) Benannte Vertragsstaaten:
**DE FR GB IT**

(30) Priorität: **25.09.2002  DE 10244618**

(43) Veröffentlichungstag der Anmeldung:
**22.06.2005  Patentblatt 2005/25**

(73) Patentinhaber: **Olympus Biosystems GmbH
82152 Planegg (DE)**

(72) Erfinder:
• **SEEL, Matthias
  80339 München (DE)**
• **SCHALLER, Klaus
  deceased (DE)**

(74) Vertreter: **Jordan, Volker Otto Wilhelm
Weickmann & Weickmann
Patentanwälte
Postfach 860 820
81635 München (DE)**

(56) Entgegenhaltungen:
**US-A- 4 595 829          US-A- 5 675 140**

• **PATENT ABSTRACTS OF JAPAN vol. 1999, no. 09, 30. Juli 1999 (1999-07-30) -& JP 11 095091 A (OLYMPUS OPTICAL CO LTD), 9. April 1999 (1999-04-09)**
• **PATENT ABSTRACTS OF JAPAN vol. 007, no. 152 (P-208), 5. Juli 1983 (1983-07-05) -& JP 58 063906 A (OLYMPUS KOGAKU KOGYO KK), 16. April 1983 (1983-04-16)**

EP 1 543 369 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft nach einem ersten. Aspekt eine optische Objektuntersuchungseinrichtung gemäß Anspruch 1.

Derartige, als Mikroskop mit Autofokus-Anordnung ausgeführte Einrichtungen sind beispielsweise aus der US 5,925,874, der US 5,288,987 und der zur US 5,288,987 korrespondierenden DE 41 31 737 C2 bekannt. Betreffend Autofokus-Systeme für mikroskopische Anwendungen und allgemein Untersuchungseinrichtungen für insbesondere biologische Objekte kann ferner beispielsweise auf die US 5,790,710, die US 5,875,258, die US 5,932,872, die US 5,995,143, die US 6,128,129, die US 6,259,080 B1, die US 5,710,662, die US 5,886,813 und die US 6,052,223 verwiesen werden. Betreffend das Thema "Autofokus" im Allgemeinen sind ferner beispielsweise die US 5,572,011, die US 5,710,667, die US 6,137,580, die US H1972 H (SIR), die US 6,208,465 B1, die US 6,252,835 B1 und die US 5,675,140 von Interesse. Die in der US 5,675,140 verwendete Autofokussierung bzw. Scharfstellung auf Grundlage von astigmatischem Laserlicht ist in dem grundlegenden Aufsatz "Automatic focus control: the astigmatic lens approach", Cohen, D. K. et al., Applied Optics 23 (1984) No. 4, 565-570 detailliert beschrieben und analysiert. Aus der US 6,130,745 ist ein Verfahren und eine Vorrichtung zum Autofokussieren auf eine in der Aufnahme (Weil) einer so genannten Mikrotiterplatte (Microplate) enthaltene Zielschicht bekannt. Es wird vorgeschlagen, mittels eines einen Fokuspunkt aufweisenden optischen Strahls einen optischen Bezugspunkt an einer vorgegebenen Stelle an der Unterseite der Mikrotiterplatte optisch zu erfassen und den Fokuspunkt des Strahles um einen festgelegten Abstand von dem Bezugspunkt zu einer Zielschicht in der jeweiligen Aufnahme zumindest teilweise oberhalb des Bodens der Mikrotiterplatte zu verschieben. Nach der Fokussierung des optischen Strahls, ein Laserlichtstrahl, auf die Zielschicht dient dieser zur Anregung von Fluoreszenzlicht, das über einen Beobachtungsstrahlengang einem Photomultiplier zur Erfassung zugeführt wird.

Hintergrund der Erfindung ist unter anderem, dass die optische Objekterfassung, insbesondere Mikroskopie, zunehmend automatisiertwird, insbesondere wenn es um biologische Objekte und biologische Fragestellungen geht. Beispielsweise erfolgt im Pharmabereich zunehmend die Wirkstoffsuche auf Grundlage lebender Zellen. Ein modernes Verfahren hierfür ist z. B. das so genannte "High-content-screening" (HCS), bei dem viele Beobachtungsgefäße (Aufnahmen, Wells) in so genannten Mikrotiterplatten nacheinander angefahren und optisch, insbesondere mikroskopbasiert, untersucht werden, insbesondere zur Darstellung biologisch relevanter Vorgänge. Hierbei werden häufig bildgebende Fluoreszenzmethoden angewendet.

Bei derartigen Untersuchungsverfahren werden häufig mikroskopische Anordnungen eingesetzt, die mit Verfahrsystemen für die Mikrotiterplatten, speziellen Beleuchtungseinrichtungen und Bildaufnahmesystemen ausgestattet sind, welche es in Kombination erlauben, die Lebensvorgänge aufzuzeichnen und, meist computerbasiert, auszuwerten. In der Regel ist eine sehr hohe Bildauflösung erforderlich, oft nahe an der optischen Auflösungsgrenze. Für die Aufnahme der Lebensvorgänge bzw. momentaner Zustände der optischen Objekte (insbesondere Zellen) ist die "richtige" Einstellung der Untersuchungseinrichtung, insbesondere Mikroskopanordnung, erforderlich, so dass die interessierende Objektebene scharf auf einen Bildsensor (ggf. CCD-Detektor) abgebildet bzw. die Mikroskopanordnung richtig fokussiert ist, im Falle einer konfokalen Mikroskopie in die interessierende Objektebene, sonst entsprechend der scharf optisch abzubildenden Objektebene.

Die Fokussierung eines Mikroskops geschieht bei der manuellen Mikroskopie über den so genannten "Z-Trieb" des Mikroskops auf Grundlage des vom menschlichen Auge gesehenen Bildes und der Bildverarbeitung durch das für solche Prozesse sehr gut geeignete menschliche Gehirn. Erfolgt eine derartige Scharfstellung oder Fokussierung einer optischen Einrichtung, insbesondere eines Mikroskops, automatisiert, so spricht man von einer "Autofokussierung". Die Autofokussierung ist technisch häufig sehr anspruchsvoll und insbesondere dann problematisch, wenn für die Autofokussierung nur wenig Zeit zur Verfügung steht. Herkömmliche Ansätze stoßen insbesondere dann an Grenzen, wenn sehr viele Proben in möglichst kurzer Zeit untersucht werden sollen. Geschwindigkeitsbegrenzend sind einerseits Autofokus-Verfahren, die alleine auf optischer Bildverarbeitung beruhen. Andererseits ist geschwindigkeitsbegrenzend, dass bei den herkömmlichen Ansätzen in der Regel nach dem Anfahren eines weiteren Wells der jeweiligen Mikrotiterplatte wieder eine vollständige Autofokussierungssequenz durchlaufen werden muss, jedenfalls dann, wenn - wie das die Regel ist - die Mikrotiterplatte eine den interessierenden mikroskopischen Maßstab deutlich übersteigende geometrische Unregelmäßigkeit, etwa einen entsprechend gewellten oder entsprechende Dickenschwankungen aufweisenden Plattenboden aufweist. Hinzu kommt, dass herkömmliche Autofokussierungsverfahren auf Grundlage eines in Richtung zum Objektbereich gerichteten Laserstrahls auf einer Verstellung des Beobachtungsstrahlengangs beruhen und dementsprechend also beispielsweise der normale "Z-Trieb" des Mikroskops im Zuge der Autofokussierungssequenz betätigt wird. Derartige Verstellungen des Beobachtungsstrahlengangs sind alleine schon aufgrund der zu bewegenden Massen relativ langsam.

Eine Aufgabe der Erfindung ist demgegenüber, eine schnellere Autofokussierung bzw. Scharfstellung des Beobachtungsstrahlengangs in Bezug auf ein interessierendes Objekt zumindest im Zusammenhang mit der Beobachtung bzw. Untersuchung mehrerer Objekte auf einem gemeinsamen Objektträger (ggf. Mikrotiteplatte) zu ermögüchen oder zumindest eine technische Grundlage für eine schnellere Fokussierung in diesem Zusammenhang zu schaffen.

Zur Lösung dieser Aufgabe wird in Bezug auf die eingangs angesprochene Objektuntersuchungseinrichtung nach dem ersten Aspekt der Erfindung vorgeschlagen, dass der Messstrahlengang unabhängig vom Beobachtungsstrahlengang automatisch mittels einer Aktuatoranordnung hinsichtlich des Abstands wenigstens eines optischen Elements relativ zu einer Bezugsebene des Objektbereichs oder/und relativ zu einem anderen optischen Element auf Grundlage wenigstens eines von der Detektoranordnung abgegebenen Signals verstellbar ist, um eine von einer Fokussierung oder Scharfeinstellung des Beobachtungsstrahlengangs unabhängige automatische Fokussierung oder Scharfeinstellung des Messstrahlengangs zu ermöglichen.

Dadurch, dass der Messstrahlengang unabhängig vom Beobachtungsstrahlengang verstellbar ist, braucht im Zuge einer Scharfstell- oder Autofokus-Sequenz nicht stets der Beobachtungsstrahlengang verstellt werden, so dass bei entsprechender Auslegung des Messstrahlengangs und der Aktuatoranordnung deutlich kürzere Stellzeiten möglich sind. Insoweit kann die Scharfstell- oder Autofokus-Sequenz von vornherein entsprechend schneller ablaufen. Ist dann der Messstrahlengang fokussiert oder scharf eingestellt, so kann dann auf Grundlage dieser Einstellung des Messstrahlengangs der Beobachtungsstrahlengang entsprechend eingestellt bzw. nachgeführt werden, ohne noch unbedingt eine eigene Scharfstell- oder Autofokus-Sequenz bezogen auf den Beobachtungsstrahlengang durchführen zu müssen. Aufgrund eines vorgegebenen oder kalibrierbaren Zusammenhangs zwischen einer durch die automatische Scharfstell- oder Autofokus-Anordnung eingestellten Einstellung des Messstrahlengangs und einer eine entsprechende Fokussierung oder Scharfeinstellung des Beobachtungsstrahlengangs ergebenden Einstellung des Beobachtungsstrahlengangs ist im Prinzip ohne jegliche weitere Scharfstell-oder Autofokus-Prozesse die Fokussierung oder Scharfeinstellung des Beobachtungsstrahlengangs möglich. Die vom Beobachtungsstrahlengang unabhängige Verstellbarkeit des Messstrahlengangs ermöglicht dabei, dass - soweit erforderlich - bei einer Verstellung des Beobachtungsstrahlengangs der Messstrahlengang so nachgeführt wird, dass dessen Fokussierung oder Scharfeinstellung und insoweit eine Referenzeinstellung erhalten bleibt.

Es ist allerdings nicht zwingend, dass der Messstrahlengang und der Beobachtungsstrahlengang auf die gleiche Objektebene im Objektbereich fokussiert bzw. scharf eingestellt werden. Es ist vielmehr durchaus sinnvoll, dass die automatische Scharfstell- oder Autofokus-Anordnung den Messstrahlengang auf eine beispielsweise durch eine reflektierende Grenzschicht oder Oberfläche definierte Referenzebene fokussiert bzw. scharfstellt, während danach auf Grundlage dieser Einstellung des Messstrahlengangs der Beobachtungsstrahlengang auf eine gegenüber dieser Referenzebene im Abstand angeordnete Objektebene fokussiert bzw. scharf eingestellt wird, sei es manuell oder automatisch oder automatisiert durch eine ggf. programm- und computerbasierte Steuereinheit. Dabei kann durchaus bei der Einstellung des Beobachtungsstrahlengangs noch eine eigenständige Scharfstell- oder Autofokus-Sequenz durchgeführt werden, beispielsweise alleine auf Grundlage einer Bildverarbeitung . Da hierbei aber schon von dem Autofokus- bzw. Scharfstell-Ergebnis der automatischen Scharfstell-oder Autofokus-Anordnung in Bezug auf den Messstrahlengang ausgegangen werden kann, kann eine derartige nachgeschaltete Scharfstell-oder Autofokus-Sequenz sehr viel schneller und auf Grundlage deutlich geringeren Datenverarbeitungsaufwands durchgeführt werden. Dies gilt insbesondere dann, wenn das interessierende Objekt, etwa eine biologische Probe, in einem festen oder mit gewissen Wahrscheinlichkeiten vorhersagbaren Abstand oder Abstandsbereich zur Referenzfläche (ggf. der genannten Grenzfläche oder Oberfläche) angeordnet ist. Dies ist beim angesprochenen High-Content-Screening auf Grundlage von Mikrotiterplatten häufig der Fall. Somit kann unter Berücksichtigung des Abstands auf eine Detektion der Grenzfläche oder Oberfläche mittels der laserstrahlbasierten automatischen Scharfstell-oder Autofokus-Anordnung das interessierende Objekt unmittelbar scharf über den Beobachtungsstrahlengang abgebildet bzw. der Beobachtungsstrahlengang entsprechend scharf eingestellt bzw. fokussiert werden oder es ist das Objekt doch zumindest so weit etwa durch eine Kamera oder einen Bildsensor im Bild- oder Beobachtungsbereich erkennbar, dass mit hilfe von auf einer Bildverarbeitung beruhenden Softwaremethoden die letzte Unschärfe bzw. Fehl-Fokussierung mit geringem Datenverarbeitungsaufwand und geringem Zeitaufwand beseitigt werden kann.

Erstreckt sich die die Referenzebene definierende reflektierende Grenzfläche oder Schicht über einen größeren Bereich eines Objektträgers, etwa eine Mikrotiterplatte, in dem sich mehrere Objekte bzw. Objekte aufnehmende Wells befinden, so können weitere Zeitvorteile daraus resultieren, dass bei einer seitlichen Verschiebung des Objektträgers der Messstrahlengang ohne großen Aufwand entsprechend dem Verlauf der Grenzfläche bzw. Oberfläche nachgeführt werden kann und dann dementsprechend seinen Scharfeinstell- bzw. Fokussierungszustand beibehält. Im Idealfall braucht deswegen für einen Objektträger nur einmal eine vollständige Scharfstell-oder Autofokus-Sequenz mittels der laserstrahlbasierten Scharfstell- oder Autofokus-Anordnung durchgeführt werden.

Die Reflexion des Laserstrahls kann an ohnehin vorhandenen Grenzflächen aufgrund von ohnehin vorhandenen Brechungsindexunterschieden erfolgen. Es reichen grundsätzlich schon geringe optische Brechungsindexunterschiede aus. Ein jeweiliges Untersuchungsobjekt ist üblicherweise auf einem Träger angebracht. Dieser besteht in der Regel aus einem transparenten Material, üblicherweise Glas oder Kunststoff. Der Brechzahlunterschied zwischen Glas oder Kunststoff einerseits und Luft andererseits bedingt eine hinreichende Reflektion des Laserlichts für die Durchführung einer Scharfstell- oder Autofokus-Sequenz. Auch geringere Brechzahldiffenrenzen, die etwa im Falle eines zwischen dem Träger und dem Objektiv eines Mikroskops angeordneten Immersionsmedium auftreten, reichen in der Regel ohne gesonderte Maßnahmen für die Autofokussierung bzw. Scharfstellung aus. Dies gilt auch dann, wenn - wie dies bei biologischen Präparaten häufig der Fall ist - zwischen dem jeweiligen Untersuchungsobjekt und dem Träger eine wässrige Lösung (auch als Immersionsmedium auffassbar) vorhanden ist. Die dann auftretenden Grenzflächen mit geringen optischen Brechungsindexunterschieden lassen sich in der Regel ohne weiteres für die erfindungsgemäße Fokussierung bzw. Scharfstellung ausnutzen. Erforderlichenfalls kann man den Brechungsindex mittels geeigneter dielektrischen Schichten erhöhen oder/und hochempflindliche, nur geringe Intensitäten an reflektiertem Laserlicht benötigende Elektronik (etwa Lock-In-Technik) verwenden. Erfindungsgemäß lassen sich also im Zusammenhang mit einer automatischen Fokussierung oder Scharfstellung oder - wie weiter unten noch näher ausgeführt wird - allgemein bei der Erfassung und ggf. Untersuchung von Schichten und Schichtsystemen mit hoher Präzision und mit großer Geschwindigkeit Brechungsindexunterschiede (Grenzflächen) detektieren.

Hinsichtlich der Verstellung des Messstrahlengangs mittels der Aktuatoranordnung wird vor allem daran gedacht, dass das von dieser Verstellung betroffene optische Element bzw. die von dieser Verstellung betroffenen optischen Elemente nicht dem Beobachtungsstrahlengang zugehörig sind, so das eine momentane Einstellung des Beobachtungsstrahlengangs erhalten bleibt.

Hinsichtlich der Struktur und dem optischen Aufbau der Objektuntersuchungseinrichtung bestehen vielfältige Möglichkeiten. In der Regel wird es zweckmäßig sein, wenn ein von der Laserlichtquelle bzw. dem Laserlichteingang zum Objektbereich führender Hin-Abschnitt des Messstrahlengangs und ein vom Objektbereich zur Detektoranordnung führender Rück-Abschnitt des Messstrahlengangs zumindest teilweise zusammenfallen. Das von einer Verstellung des Beobachtungsstrahlengangs betroffene optische Element kann sowohl dem Hin-Abschnitt als auch dem Rück-Abschnitt zugehörig sein. Ferner kann das von einer Verstellung des Messstrahlengangs getroffene optische Element sowohl dem Hin-Abschnitt als auch dem Rück-Abschnitt zugehörig sein.

Wie sich aus den einleitenden Ausführungen oben schon ergibt, kann der Beobachtungsstrahlengang als Mikroskopstrahlengang ausgeführt sein. Ferner kann der Messstrahlengang einen Mikroskopstrahlengang aufweisen, der ein gegenüber dem Beobachtungsstrahlengang gesonderter Strahlengang sein kann. Es wird insbesondere daran gedacht, dass der Mikroskopstrahlengang des Messstrahlengangs sich an den als Mikroskopstrahlengang ausgeführten Beobachtungsstrahlengang anschließt oder in diesen übergeht und entgegengesetzt zu diesem gerichtet ist. So kann durch den Mikroskopstrahlengang des Messstrahlengangs eine optische Vergrößerung durch den Beobachtungsstrahlengang zumindest teilweise rückgängig gemacht werden, um mit vergleichsweise geringen Stellwegen betreffend die Verstellung wenigstens eines optischen Elements des Messstrahlengangs auszukommen.

Es wurde schon angedeutet, dass die Scharfstell- oder Autofokus-Anordnung vorteilhaft dafür ausgebildet sein kann, mittels der Aktuatoranordnung den Messstrahlengang derart zu verstellen, dass der Laserstrahl auf eine im Objektbereich angeordnete reflektierende Fläche oder Grenzfläche fokussiert oder abgebildet wird.

Eine bevorzugte Ausgestaltung zeichnet sich dadurch aus, dass die Scharfstell- oder Autofokus-Anordnung dafür ausgebildet ist, mittels der Aktuatoranordnung eine Bildebene oder Zwischenbildebene des Messstrahlengangs und eine der reflektierenden Oberfläche oder Grenzfläche zugeordnete Bildebene oder Zwischenbildebene des Beobachtungsstrahlengangs in Übereinstimmung zu bringen.

Hinsichtlich des Detektionsprinzips der Scharfstell- oder Autofokus-Anordnung bestehen vielfältige Möglichkeiten, wie sich aus dem oben zitierten Stand der Technik ergibt. Beispielsweise kann man eine Autofokussierung bzw. Scharfstellung auf Grundlage einer optischen Triangulation vorsehen. Demgegenüber ist es bevorzugt, dass die Scharfstell- oder Autofokus-Anordnung astigmatisches Laserlicht verwendet und die Detektoranordnung wenigstens einen ortsempfindlichen Detektor, insbesondere eine Quadranten-Photodiode, aufweist, um eine Scharfstellung bzw. Autofokussierung auf Grundlage zweier in Propagationsrichtung im Abstand voneinander auftretenden linien- oder ellipsenförmigen Laserlicht-Intensitätsmustern, die den zueinander orthogonalen Bildlinien oder Fokuslinien einer astigmatischen Abbildung entsprechen, und eines zwischen diesen Intensitätsmustern auftretenden punkt- oder kreisförmigen Laserlicht-Intensitätsmusters, das dem Zerstreuungskreis zwischen den zueinander orthogonalen Bildlinien oder Fokuslinien einer astigmatischen Abbildung entspricht, vorzusehen. Es wird hierzu auf den oben zitierten Aufsatz "Automatic focus control: the astigmatic lens approach" von D. K. Cohen et al., Applied Optics, Vol. 23, No. 4, S. 565-570, vom 15.02.1984 und die dieses Autofokusprinzip in einem anderen speziellen Zusammenhang anwendende US 5,675,140 verwiesen. Ein wesentlicher Vorteil ist, dass der optische bzw. bauliche Aufwand für die Bereitstellung einer derartigen Scharfstell- oder Autofokus-Anordnung vergleichsweise gering ist und eine hohe Zuverlässigkeit erreicht wird.

Um eine Scharfstellung bzw. eine Autofokussierung nach diesem Prinzip zu realisieren, kann der Messstrahlengang wenigstens eine Zylinderlinse aufweisen, um dem Laserlicht einen Astigmatismus zu verleihen oder einen Astigmatismus des Laserlichts zu verstärken. Ferner kann die Objektuntersuchungseinrichtung dementsprechend eine astigmatische Laserlichtquelle aufweisen.

Die Objektuntersuchungseinrichtung kann vorteilhaft mit einer wenigstens ein Signal von der Detektoranordnung empfangenden Steuer-/Regel-Einheit ausgeführt sein, die die Aktuatoranordnung des Messstrahlengangs ansteuert. Vorzugsweise weist die Steuer-/Regel-Einheit einen wenigstens einen Detektor der Detektoranordnung und die Aktuatoranordnung umfassenden Regelkreis auf, um die Einstellung des Messstrahlengangs einzuregeln und eine Fokussierung oder Scharfeinstellung des Messstrahlengangs geregelt halten zu können, ggf. einschließlich einer Nachregelung entsprechend einer den Messstrahlengang betreffenden Verstellung des Beobachtungsstrahlengangs.

Ein hoher Komfort wird erreicht, wenn die Steuer-/Regel-Einheit eine Suchfunktionalität zum Suchen einer einer Fokussierung oder Scharfeinstellung entsprechenden Einstellung des Messstrahlengangs aufweist. Eine derartige Suchfunktionalität ist auch eine wichtige Grundlage für automatisierte Screening-Anwendungen und dergleichen. Es wird vor allem daran gedacht, dass die Suchfunktionalität eine Einstellung des Messstrahlengangs sucht, die einer Fokussierung oder Scharfstelleinstellung des Messstrahlengangs in Bezug auf eine Laserlicht reflektierende Schicht oder Grenzfläche im Objektbereich entspricht. Vorteilhaft kann die Suchfunktionalität eine Diskriminierungsfunktionalität auf Grundlage wenigstens eines für eine Gesamtintensität des in die Detektoranordnung einfallenden Laserlichts repräsentativen Signals umfassen, um Fehleinstellungen bzw. Fehlfokussierungen/Fehlscharfeinstellungen auf Grundlage etwa eines internen Laserlichtreflexes zu vermeiden. In diesem Zusammenhang wird vorgeschlagen, dass die Detektoranordnung wenigstens einen Intensitätsdetektor aufweist, der eine für die Gesamtintensität des in die Detektoranordnung einfallenden Laserlichts repräsentative Laserlichtintensität erfasst, wobei der Intensitätsdetektor das Laserlicht vorzugsweise über einen Raumfilter empfängt. Es ist aber nicht ausgeschlossen, dass ein derartiger Intensitätsdetektor bzw. ein von einem derartigen Intensitätsdetektor bereitgestelltes Signal die Basis für die automatische Autofokus- bzw. Scharfeinstell-Funktion darstellt, wie beispielsweise an sich aus der oben schon genannten US 6,130,745 bekannt.

Es wurde oben schon angesprochen, dass eine phasenempfindliche Detektion des Laserlichts erfolgen kann. Es wird diesbezüglich konkret vorgeschlagen, dass eine modulierbare Laserlichtquelle oder eine der Laserlichtquelle oder dem Laserlichteingang nachgeschaltete Modulatoranordnung vorgesehen ist, und dass der Detektoranordnung wenigstens eine phasenempfindliche Auswerte- oder Verstärkungsschaltung zugeordnet ist, um eine phasenempfindliche Detektion auf Grundlage modulierten Laserlichts vorzusehen. Auf diese Weise wird eine Rauschunterdrückung erreicht und es werden störende Einflüsse von Fremdlicht (z. B. Umgebungslicht, Mikroskopbeleuchtung usw.) vermieden. Es kann zuverlässig eine Autofokussierung bzw. automatische Scharfstellung des Messstrahlengangs erreicht werden, selbst wenn aufgrund eines sehr geringen Brechungsindexunterschieds bzw. einer nur schwach reflektierenden Oberfläche bzw. Grenzschicht nur ein geringer Anteil des Laserlichts aus dem Objektbereich in Richtung zur Detektoranordnung rückreflektiert wird.

In der Regel wird dem Beobachtungsstrahlengang eine Aktuatoranordnung zugeordnet sein, mittels der auf Grundlage wenigstens eines Signals der Scharfstell- oder Autofokus-Anordnung der Beobachtungsstrahlengang derart einstellbar ist, dass eine ausgewählte Objektebene scharf abgebildet wird. Diesbezüglich wird weiterbildend vorgeschlagen, dass die scharf abzubildende Objektebene bezogen auf eine Referenzebene der Scharfstell-oder Autofokus-Anordnung mit definiertem Abstand zu dieser auswählbar ist. In der Regel wird, wie schon erwähnt, eine im Objektbereich angeordnete reflektierende Oberfläche oder Grenzfläche, auf die der Laserstrahl fokussiert oder abgebildet wird, die Referenzebene bilden.

In diesem Zusammenhang wird als besonders bevorzugt vorgeschlagen, dass eine/die Steuer-/Regeleinheit dafür ausgebildet ist, auf Grundlage wenigstens einen Signals der Scharfstell- oder Autofokus-Anordnung und wenigstens eines Auswahlsignals, das vorzugsweise einen Soll-Abstand der scharf abzubildenden Objektebene zur Referenzebene repräsentiert, die Aktuatoranordnung des Beobachtungsstrahlengangs anzusteuern. Angemerkt sei, dass wenn hier oder an anderer Stelle dieser Erfindungsbeschreibung und Erläuterungen von "Signalen" die Rede ist, es sich nicht unbedingt um analoge elektrische Signale, sondern auch um Signale im weiteren Sinne, beispielsweise rein digitale Daten, handeln kann. So kann die Steuerung/Regelung bzw. Ansteuerung auf Grundlage von analogen elektronischen Bauteilen und Schaltkreisen oder auch auf Grundlage einer programmgesteuerten Steuerung/Regelung auf der Basis etwa eines Mikroprozessors erfolgen. Letzteres ist in der Regel bevorzugt.

Besonders vielfältige Anwendungsmöglichkeiten ergeben sich dann, wenn die Objetctuntersuchungseinrichtung eine auf digitaler Bildverarbeitung beruhende Scharfstell- oder Autofokus-Funktionalität aufweist, die ein im Bildbereich erfasstes digitales Bild auswertet und durch Verstellung des Beobachtungsstrahlengangs mittels der Aktuatoranordnung, etwa durch Vorgabe eines entsprechenden Auswahlsignals bzw. Änderung des Auswahlsignals, eine aus der digitalen Bildverarbeitung ermittelte Ziel-Objektebene scharf abbildet oder den Beobachtungsstrahlengang in Richtung einer scharfen Abbildung einer aus der digitalen Bildverarbeitung ermittelten Ziel-Objektebene verstellt. Die Scharfstell-Autofokus-Funktionalität ist vorzugsweise dafür geeignet, von einer vermittels der laserstrahlgestützten Scharfstell- oder Autofokus-Anordnung ermittelten, sich auf den Messstrahlengang beziehenden Fokussierungs- bzw. Scharfeinstellstellung des Messstrahlengangs auszugehen, so dass je nach Anwendung ggf. nur noch eine "letzte Unschärfe" zu beseitigen ist. Es ergeben sich die oben erwähnten, insbesondere für automatisierte Screeming-Verfahren höchstrelevanten Geschwindigkeitsvorteile.

Ferner kann die Objektuntersuchungseinrichtung vorteilhaft eine auf digitaler Bildverarbeitung beruhende, ggf. der Scharfstell- oder Autofokus-Funktionalität übergeordnete Suchfunktionalität zum Suchen interessierender Objekte oder Objektebenen im Bildbereich aufweisen, wobei das Suchen zumindest auf einer Verstellung des Beobachtungsstrahlengangs vermittels der Aktuatoranordnung, etwa durch Vorgabe eines entsprechenden Auswahlsignals bzw. Änderung des Auswahlsignals, beruht.

Die Objektuntersuchungseinrichtung kann ein Verfahrsystem zum automatischen oder automatisierten seitlichen Verfahren eines Objektträgers im Objektbereich relativ zum Beobachtungsstrahlengang aufweisen. In der Regel wird der Beobachtungsstrahlengang und entsprechend auch der Messstrahlengang stationär angeordnet sein, so dass der Objektträger seitlich verfahren wird.

Weiterbildend wird vorgeschlagen, dass die Scharfstell- oder Autofokus-Anordnung dafür ausgebildet ist, mittels der Aktuatoranordnung den Messstrahlengang derart zu verstellen und nachzustellen, dass der Laserstrahl auf eine im Objektbereich angeordnete reflektierende Oberfläche oder Grenzfläche des Objektträgers fokussiert oder abgebildet wird und während eines seitlichen Verfahrens des Objektträgers die Fokussierung bzw. Abbildung des Laserstrahls auf die Oberfläche bzw. Grenzfläche aufrechterhalten wird, erforderlichenfalls durch Nachstellung des Messstrahlengangs entsprechend eines Verlaufs der Oberfläche bzw. Grenzfläche. Dieser Weiterbildungsvorschlag und die sich hieraus ergebenen Vorteile wurden oben schon angesprochen. Die Objektuntersuchungseinrichtung ist damit besonders tauglich für Screening-Methoden etwa auf Grundlage von Mikrotiterplatten, die eine Vielzahl von Beobachtungsgefäßen (Wells) mit biologischen Objekten, ggf. lebende Zellen, enthalten.

Betreffend den Beobachtungsstrahlengang kann vorgesehen sein, dass eine momentane absolute Abbildungseinstellung des Beobachtungsstrahlengangs, die eine im Raum absolut oder relativ zu einer Fixebene der Objektuntersuchungseinrichtung definierte Objektebene scharf abbildet, während des seitlichen Verfahrens eines Objektträgers erhalten bleibt. Eine andere, beispielsweise für in einem engen Abstandsbereich zu einem Objektträgerboden oder dergleichen angeordnete Objekte besonders vorteilhafte Möglichkeit ist, dass der Beobachtungsstrahlengang mittels einer/der Aktuatoranordnung auf Grundlage wenigstens eines Signals der Scharfstell- oder Autofokus-Anordnung automatisch nachstellbar ist, um eine momentane relative Abbildungseinstellung des Beobachtungsstrahlengangs, die eine relativ zur reflektierenden Oberfläche bzw. Grenzfläche definierte Objektebene scharf abbildet, während des seitlichen Verfahrens des Objektträgers aufrecht zu erhalten oder nach einem seitlichen Verfahren wieder einzustellen. Es braucht dann der Beobachtungsstrahlengang nach dem Anfahren des nächstes Beobachtungsgefäßes (ggf. Mikrotiterplattenaufnahme bzw. Well) nicht oder nur noch sehr geringfügig nachgestellt werden, um optimal zu fokussieren bzw. scharf zu stellen.

Der Objektuntersuchungseinrichtung kann wenigstens ein Objektträger für wenigstens ein Objekt, vorzugsweise mehrere Objekte zugeordnet sein. Vorzugsweise sind mehrere Objektträger vorgesehen. Bei dem Objektträger kann es sich vorteilhaft um eine so genannte Mikrotiterplatte handeln. Es wird vorgeschlagen, dass der Objektträger bzw. die Mikrotiterplatte an einer Oberfläche oder Grenzfläche zumindest bereichsweise eine Verspiegelung oder -vorzugsweise - an einer Oberfläche oder Grenzfläche zumindest bereichsweise eine das Reflexionsvermögen für das Laserlicht erhöhende elektrische Beschichtung aufweisen. Die dielektrische Schicht bzw. die dielektrischen Schichten sollten so gewählt und derart aufgebracht, beispielsweise aufgedampft sein, dass das verwendete Laserlicht nach seiner Laserwellenlänge in hinreichendem Maße reflektiert wird, möglichst aber nicht das über den Beleuchtungsstrahlengang abzubildende, die Bildinformation tragende Beobachtungslicht (ggf. das vom Untersuchungsobjekt emittierte Fluoreszenzlicht im Falle einer fluoreszenzmikroskopischen Anwendung) oder/und möglichst nicht das Beleuchtungslicht aus dem Beleuchtungsstrahlengang (im Falle einer fluoreszenzmikroskopischen Anwendung ggf. das zur Anregung der Fluoreszenz nötige Licht). Welches Licht zwingend durchgelassen werden muss bzw. welches Licht nur nach Möglichkeit durchgelassen werden muss, ergibt sich aus dem Aufbau und der Strahlengangführung der Objektuntersuchungseinrichtung (etwa Aufrecht-Beobachtungsstrahlengang oder Invers-Beobachtungsstrahlengang) und daraus, wo die das Reflexionsvermögen für das Laserlicht erhöhende dielektrische Beschichtung am Objektträger vorgesehen ist. Allgemein wird vorgeschlagen, dass die Beschichtung derart ausgeführt ist, dass sie Beleuchtungslicht aus dem Beleuchtungsstrahlengang oder/und von wenigstens einem Objekt ausgehendes, über den Beobachtungsstrahlengang abzubildendes Beobachtungslicht, beispielsweise Fluoreszenzlicht, mit hohem Transmissionsgrad durchlässt.

Die Objektuntersuchungseinrichtung kann vorteilhaft wenigstens einen Auflicht-Beleuchtungsstrahlengang, vorzugsweise wenigstens zwei Auflicht-Beleuchtungsstrahlengänge aufweisen, der/die gewünschtenfalls zumindest teilweise mit dem Beobachtungsstrahlengang zusammenfällt/zusammenfallen. Ferner kann die Objektuntersuchungseinrichtung wenigstens einen Durchlicht-Beleuchtungsstrahlengang aufweisen.

Betreffend die erfindungsgemäße Objektuntersuchungseinrichtung wird insbesondere daran gedacht, dass sie ein den Objektbereich, den Beobachtungsstrahlengang und wenigstens einen Beleuchtungsstrahlengang aufweisendes Mikroskop umfasst. Wie schon angesprochen, kann das Mikroskop als Invers-Mikroskop ausgeführt sein.

Dies ist insbesondere für die angesprochenen Screening-Anwendungen eine besonders günstige Bauweise. Es kommt durchaus aber auch eine Ausführung des Mikroskops als Aufrecht-Mikroskop in Betracht.

Das Mikroskop kann als über den Beobachtungsstrahlengang optisch ein Bild in den Bild- oder Beobachtungsbereich abbildendes Abbildungsmikroskop ausgeführt sein. Im Falle lichtmikroskopischer Anwendungen wird durch ein derartiges Abbildungsmikroskop das jeweilige mikroskopische Objekt durch sichtbares Licht vergrößert dargestellt. Im Falle einer fluoreszenzmikroskopischen Anwendung erfolgt die vergrößerte Darstellung des mikroskopischen Objekts auf Grundlage des von diesem ausgehenden Fluoreszenzlichts.

Bei dem Mikroskop der Objektuntersuchungseinrichtung kann es sich ferner auch um ein so genannten konfokales Mikroskop oder/und Laserscan-Mikroskop handeln, wobei wiederum vor allem an fluoreszenzmikroskopische Anwendungen gedacht wird.

Allgemein wird ferner vorgeschlagen, dass die Objektuntersuchungseinrichtung eine den Objektbereich, den Beobachtungsstrahlengang und wenigstens einen Beleuchtungsstrahlengang aufweisende, ggf. das Mikroskop umfassende Fluoreszenz-Messvorrichtung umfasst. Gerade für die Untersuchung biologischer Objekte sind Fluoreszenz-Mess- und Untersuchungsverfahren, insbesondere fluoreszenzmikroskopische Mess- und Untersuchungsverfahren, besonders geeignet.

Die Erfindung betrifft nach einem zweiten Aspekt ferner eine Einrichtung zum Erfassen oder/und Untersuchen von Schichten, die als für optische Strahlung zumindest teilweise durchlässige Schicht gegenüber einer Umgebung oder/und einem Träger oder/und wenigstens einer Nachbarschicht einen Brechzahlsprung aufweisen oder/und für optische Strahlung reflektierend sind. Von Interesse sind beispielsweise biologische Schichten oder Schichtsysteme, wie z. B. Zahnbeläge oder biologische Ablagerungen in Rohrleitungen. Es besteht ein Interesse, derartige Schichten bzw. Schichtsysteme hinsichtlich ihrer Schichtungsstruktur zu untersuchen.

Es wird vorgeschlagen, dass eine derartige Einrichtung zum Erfassen oder/und Untersuchen von Schichten erfindungsgemäß umfasst: einen Objektbereich, dem ein zu untersuchendes, wenigstens eine interessierende Schicht aufweisendes Objekt oder ein Objektträger mit wenigstens einem zu untersuchenden, wenigstens eine interessierende Schicht aufweisenden Objekt oder ein wenigstens eine Schicht aufweisender Schichtenträger zugeordnet werden kann; eine auf Grundlage wenigstens eines in Richtung zum Objektbereich gerichteten Laserstrahls betreibbare automatische Scharfstell- oder Autofokus-Anordnung, wobei die automatische Scharfstell- oder Autofokus-Anordnung einen den Laserstrahl führenden Messstrahlengang aufweist, der von einer Laserlichtquelle oder einem Laserlichteingang ausgeht und zum Objektbereich und von diesem zu einer Detektoranordnung führt, wobei der Messstrahlengang automatisch mittels einer Aktuatoranordnung hinsichtlich des Abstands wenigstens eines optischen Elements relativ zu einer Bezugsebene des Objektbereichs oder/und relativ zu einem anderen optischen Element auf Grundlage wenigstens eines von der Detektoranordnung abgegebenen Signals verstellbar ist, um eine automatische Fokussierung oder Scharfeinstellung des Messstrahlengangs in Bezug auf eine reflektierende, wenigstens einer Schicht zugeordnete Grenzfläche zu ermöglichen. Die erfindungsgemäße Einrichtung kann von einer erfindungsgemäßen Objektuntersuchungseinrichtung gebildet sein oder Bestandteil einer erfindungsgemäßen Objektuntersuchungseinrichtung sein oder zumindest eine Komponente oder Baugruppe mit einer erfindungsgemäßen Objektuntersuchungseinrichtung gemeinsam haben.

Mittels der automatischen Scharfstell- oder Autofokus-Anordnung können zuverlässig Schichten bzw. deren Oberflächen und Grenzflächen auf Basis des gemäß auftretendem Brechzahlsprung reflektierten Laserlichts erfasst werden. Aus jeweils einem Fokussierungs- oder Scharfstell-Zustand des Messstrahlengangs entsprechenden Verstellzuständen des Messstrahlengangs, ggf. Z-Trieb-Einstellung des Messstrahlengangs, kann mit hoher Genauigkeit die optische Dicke oder/und die geometrische Dicke (ggf. unter Berücksichtigung zusätzlicher Daten) ermittelt werden.

Die erfindungsgemäße Einrichtung weist vorzugsweise eine wenigstens ein Signal von der Detektoranordnung empfangende Steuer-/Regel-Einheit auf, die die Aktuatoranordnung des Messstrahlengangs ansteuert. Die Steuer/Regel-Einheit kann vorteilhaft einen wenigstens einen Detektor der Detektoranordnung und die Aktuatoranordnung umfassenden Regelkreis aufweisen.

Weiterbildend wird vorgeschlagen, dass die Steuer-/Regel-Einheit eine Suchfunktionalität zum Suchen einer Einstellung des Messstrahlengangs, die einer Fokussierung oder Scharfstelleinstellung des Messstrahlengangs in Bezug auf eine Laserlicht reflektierende Schicht oder Grenzfläche im Objektbereich entspricht, aufweist. Es wird insbesondere daran gedacht, dass die Suchfunktionalität dafür ausgeführt ist, einen Suchscan über einen vorgegebenen oder vorgebbaren Abstandsbereich auszuführen, um im Abstandsbereich vorhandene Schichten zu erfassen und vorzugsweise zumindest hinsichtlich ihrer optischen oder/und geometrischen Dicke zu vermessen. Damit können Schichtungsstrukturen sehr schnell erfasst und untersucht werden.

Die Scharfstell- oder Autofokus-Anordnung der Einrichtung zum Erfassen oder/und Untersuchen von Schichten kann vorteilhaft entsprechend den sich auf die Scharfstell- oder Autofokus-Anordnung der erfindungsgemäßen Objektuntersuchungseinrichtung beziehenden Erfindungs- und Weiterbildungsvorschlägen ausgeführt sein.

Die Erfindung betrifft nach einem dritten Aspekt einen Objektträger, beispielsweise eine Mikrotiterplatte. Es wird vorgeschlagen, dass der Objektträger an wenigstens einer Oberfläche oder/und an wenigstens einer Grenzschicht eine reflektionserhöhende dielektrische Beschichtung oder/und Verspiegelung aufweist.

Die Erfindung betrifft nach einem vierten Aspekt ferner ein Verfahren zur Untersuchung wenigstens eines Objekts, insbesondere wenigstens eines biologischen Objekts, vorzugsweise unter Verwendung einer Objektuntersuchungseinrichtung nach der Erfindung. Es wird vorgeschlagen, dass zuerst der/ein Messstrahlengang in Bezug auf eine Laserlicht reflektierende Schicht oder Grenzfläche im Objektbereich scharfgestellt oder fokussiert wird, und dass dann der/ein Beobachtungsstrahlengang bezogen auf eine Objektebene im Objektbereich, die relativ zu einer durch die Scharfstellung bzw. Fokussierung des Messstrahlengangs definierten Referenzebene im Objektbereich definiert ist, scharfgestellt oder fokussiert wird, erforderlichenfalls unter Nachstellung des Messstrahlengangs zum Erhalt der Scharfstellung bzw. Fokussierung in Bezug auf die Laserlicht reflektierende Schicht oder Grenzfläche im Objektbereich.

Nach einem fünften Aspekt betrifft die Erfindung ferner ein Verfahren zur Erfassung oder/und Untersuchtung wenigtens einer Schicht, ggf. einer aus biologischem Material oder/und in Folge biologischer Vorgänge gebildeten Schicht, auf einem Schichtenträger, vorzugsweise unter Verwendung einer Einrichtung zum Erfassen oder/und Untersuchen von Schichten nach der Erfindung. Es wird vorgeschlagen, dass eine Einstellung des/eines Messstrahlengangs, die einer Fokussierung oder Scharfstelleinstellung des Messstrahlengangs in Bezug auf eine Laserlicht reflektierende Schicht oder Grenzfläche im Objektbereich entspricht, gesucht wird. Das erfindungsgemäße Verfahren zur Erfassung oder/und Untersuchung wenigstens einer Schicht kann, wenn gewünscht, in Verbindung mit dem erfindungsgemäßen Verfahren zur Untersuchung wenigstens eines Objekts ausgeführt werden.

Weiterbildend wird vorgeschlagen, dass ein Suchscan über einen vorgegebenen oder vorgebbaren Abstandsbereich ausgeführt wird, um im Abstandsbereich vorhandene Schichten zu erfassen und vorzugsweise zumindest hinsichtlich ihrer optischen oder/und geometrischen Dicke zu vermessen.

Nach einem weiteren allgemeineren Aspekt stellt die Erfindung ferner eine Anordnung und ein Verfahren zum automatischen Scharfstellen oder Fokussieren wenigstens eines optischen Strahlengangs auf eine reflektierende Schicht oder Grenzfläche oder/und relativ zu einer/der reflektierenden Schicht oder Grenzfläche bereit. Es ist erfindungsgemäß vorgesehen, dass der/ein Strahlengang von einer Laserlichtquelle oder einem Laserlichtausgang ausgeht und einen Laserstrahl auf die reflektierende Schicht oder Grenzfläche richtet und mittels einer Aktuatoranordnung in einen definierten Scharfstell- oder Fokussierungszustand verstellbar ist bzw. verstellt wird, in welchem der Laserstrahl definiert auf die Schicht oder Grenzfläche fokussiert oder abgebildet wird und ein von der Schicht oder Grenzfläche reflektierter Laserstrahl über den Strahlengang definiert auf eine Detektoranordnung fokussiert oder abgebildet wird. Die erfindungsgemäße Anordnung kann für eine erfindungsgemäße Einrichtung nach dem ersten oder/und zweiten Aspekt vorgesehen sein oder/und bei der Ausführung des erfindungsgemäßen Verfahrens nach dem vierten oder/und fünften Aspekt Verwendung finden. Die erfindungsgemäße Anordnung kann entsprechend den sich auf die Scharfstell- oder Autofokus-Anordnung beziehenden Erfindungs- und Weiterbildungsvorschlägen ausgeführt sein. Das erfindungsgemäße Verfahren kann unter Verwendung der erfindungsgemäßen Einrichtung nach dem ersten oder/und zweiten Aspekt oder/und bei der Ausführung des erfindungsgemäßen Verfahrens nach dem vierten oder/und fünften Aspekt durchgeführt werden. Das erfindungsgemäße Verfahren kann ein Scharfstellen bzw. Fokussieren des bzw, wenigstens eines Strahlengangs wie betreffend das Verfahren nach dem vierten oder/und fünften Aspekt erfindungsgemäß und weiterbildend vorgeschlagen, vorsehen.

Die Erfindung wird im Folgenden anhand von in den Figuren gezeigten Ausführungsbeispielen näher erläutert.

Fig. 1    zeigt schematisch wesentliche Bestandteile einer erfindungsgemäßen optischen Objektuntersuchungseinrichtung nach einer bevorzugten Ausführungsform mit einer erfindungsgemäßen, auf der Reflexion eines Laserstrahls basierenden Scharfstell- oder Autofokus-Anordnung.

Fig. 2    zeigt schematisch ein bevorzugtes Ausführungsbeispiel für die in Fig. 1 nur durch einen Block repräsentierte Scharfstell- oder Autofokus-Anordnung, die allerdings auch im anderen Zusammenhang vorteilhaft einsetzbar ist.

Fig. 3    zeigt die Anordnungen der Fig. 1 und 2 in Kombination samt einer möglichen Ausführungsform für zugehörige Elektronik.

Fig.4    zeigt schematisch eine Ausführungsvariante einer erfindungsgemäßen optischen Objektuntersuchungseinrichtung mit auf der Reflexion eines Laserstrahls basierender Scharfstell- oder Autofokus-Anordnung.

Fig. 5    zeigt in den Teilfiguren 5a) und 5b) schematisch Ausführungsvarianten für den optischen Aufbau der Scharfstell- oder Autofokus-Anordnung.

Fig. 6    zeigt in der Teilfigur 6a) ein weiteres Beispiel für eine erfindungsgemäße Objektuntersuchungseinrichtung mit einem Beobachtungsstrahlengang, zwei Auflicht-Beleuchtungsstrahlengängen, einem Durchlicht-Beleuchtungsstrahlengang und einem Messstrahlengang einer automatischen Scharfstell- oder Autofokus-Anordnung, und die Teilfiguren 6b) und 6c) veranschaulichen zwei Möglichkeiten hinsichtlich der Scharfstellung bzw. Autofokussierung der Scharfstell- oder Autofokus-Anordnung in Relation zu einer über den Beobachtungsstrahlengang abzubildenden Objektebene.

Fig. 7    zeigt schematisch ein Beispiel für eine erfindungsgemäße Mikrotiterplatte, die eine dielektrische Beschichtung für die Reflexion des Laserstrahls einer erfindungsgemäßen Scharfstett- oder Autofokus-Anordnung aufweist.

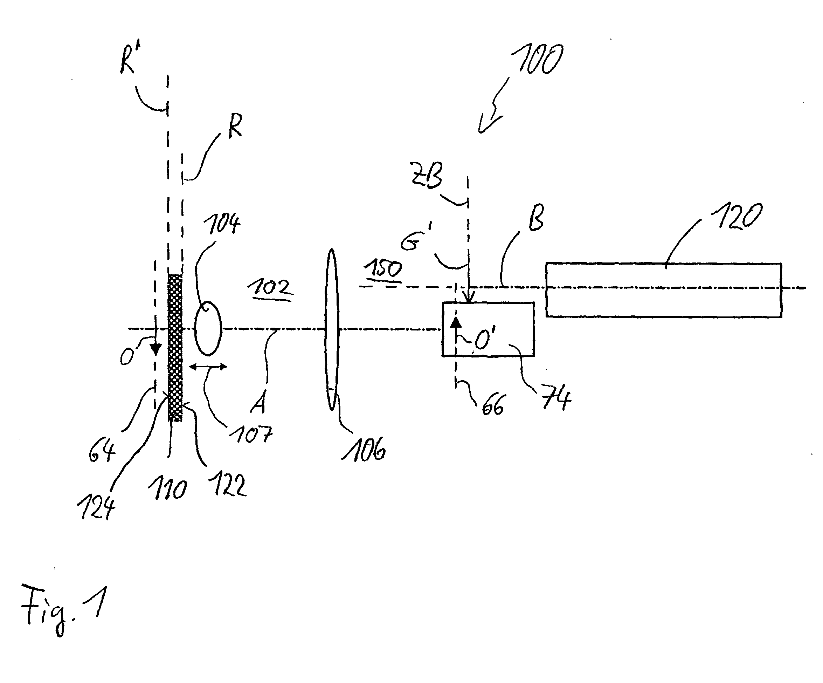

Fig. 1 zeigt schematisch ein Beispiel einer erfindungsgemäßen optischen Objektuntersuchungseinrichtung 100. Wesentlicher Bestandteil der Objektuntersuchungeinrichtung ist ein eine optische Achse A aufweisender Mikroskopstrahlengang 102, der ein Objektiv 104 und eine Tubuslinse 106 aufweist. Ein Aktuator 107 wirkt über einen so genannten Z-Trieb auf das Objektiv 104, um den Mikroskopstrahlengang 102 auf eine gewählte Objektebene 64 scharfstellen zu können. Dieses Objekt ist in Fig. 1 durch einen Pfeil O repräsentiert. Der auch als Beobachtungsstrahlengang 102 bezeichenbare Mikroskopstrahlengang 102 bildet das Objekt in eine Bildebene 66 ab, in der vorliegend ein eine zweidimensionale Auflösung gebendes Detektorfeld, beispielsweise ein CCD-Chip angeordnet ist. Eine das Detektorfeld aufweisende Detektoreinheit ist in Fig. 1 durch einen Block repräsentiert und mit 74 bezeichnet. Das in die Bildebene 66 abgebildete Bild des Objekts O ist durch einen Pfeil repräsentiert und mit O' bezeichnet.

Das der Objektuntersuchungseinrichtung 100 der Fig. 1 zugrunde liegende Mikroskop ist ein so genanntes Invers-Mikroskop, bei dem der Mikroskopstrahlengang sich nach unten hin an das Objekt bzw. einen optisch durchlässigen Objektträger 110 anschließt. Der Objektträger, beispielsweise eine so genannte Mikrotiterplatte, wird durch eine übliche mechanische Anordnung, beispielsweise verfahrbarer Mikroskoptisch, gehalten. Anzumerken ist, dass anstelle einer Verstellung des Objektivs 104 entlang der optischen Achse A auch eine Verstellung des Objektträgers mittels der diesen haltenden mechanischen Anordnung längs der optischen Achse A in Betracht kommt, um den Abstand zwischen dem Objektträger 110 und dem Objektiv 104 zu vergrößern bzw. zu verkleinern.

Die erfindungsgemäße Objektuntersuchungseinrichtung ist mit einer Autofokus- oder Scharfstell-Anordnung 120 ausgeführt, die eine optische Achse B aufweist. Die Autofokus- oder Scharfstell-Anordnung sendet entlang der optischen Achse B einen Laserstrahl in Richtung zu einem Objektbereich der Objektuntersuchungseinrichtung aus, indem der Objektträger 110 mit dem Objekt O (ggf. einer Vielzahl von Objekten O) angeordnet ist. Gemäß Fig. 1 wird der Laserstrahl in den Beobachtungsstrahlengang 102 eingekoppelt und fällt durch die Tubuslinse 106 und das Objektiv 104 und trifft dann auf den Objektträger 110.

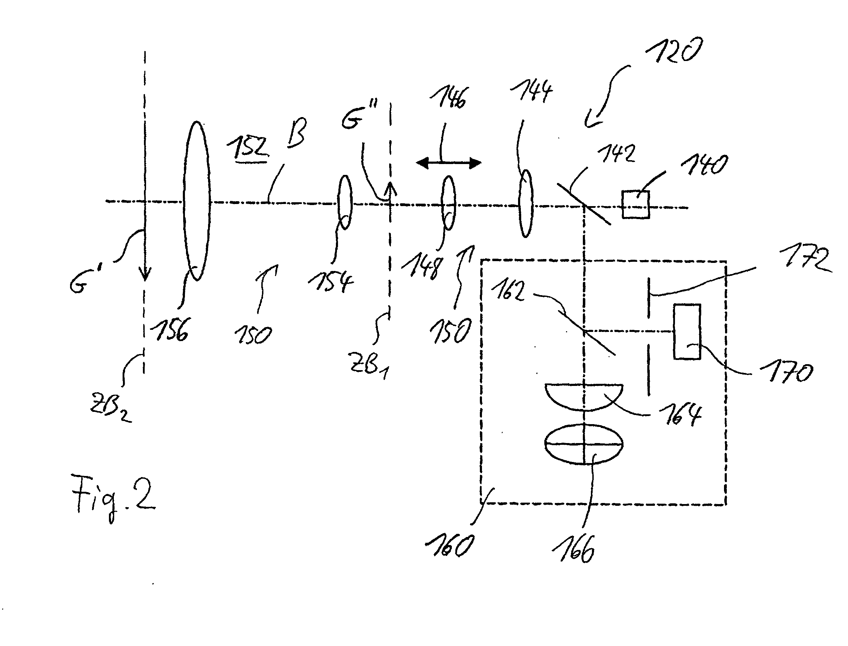

Ein wesentlicher Gesichtspunkt der im Folgenden anhand eines in Fig. 2 gezeigten Beispiels erläuterten Autofokus- oder Scharfstellanordnung 120 ist, dass diese ohne Verstellung des Beobachtungsstrahlengangs bzw. Mikroskopstrahlengangs 102 scharfgestellt bzw. fokussiert werden kann. Diese Autofokussierung bzw. Scharfstellung erfolgt auf Grundlage eines rückreflektierten Laserstrahls. Zwar kommt grundsätzlich in Betracht, dass auf eine Laserstrahl-Rückreflektion am Objekt scharfgestellt bzw. fokussiert wird. Demgegenüber wird vor allem aber daran gedacht, dass die Autofokus- bzw. Scharfstell-Anordnung bezogen auf eine Laserstrahl-Rückreflexion aus einer gegenüber der Objektebene 64 gesonderte Referenzebene scharfstellt bzw, autofokussiert, wobei es sich bei der Referenzebene vorzugsweise um eine durch den Objektträger 110 definierte Referenzebene, beispielsweise eine Oberfläche oder Grenzschicht des Objektträgers 110, handelt. Es wird vor allem an eine Grenzfläche zwischen zwei Medien bzw. Materialien unterschiedlichen Brechungsindexes gedacht, beispielsweise die Unterseite 122 des Objektträgers 110 (Referenzebene R) oder die Oberseite 124 einer Trägerplatte des Objektträgers 110 (Referenzebene R').

Herkömmliche Objektträger aus transparentem Material, insbesondere Glas oder Kunststoff, werden häufig ohne Modifikationen verwendbar sein. Zwar ist der Raum zwischen dem Träger und dem Objektiv häufig mit einem Immersionsmedium gefüllt, ferner sind insbesondere bei biologischen Präparaten zwischen den Untersuchungsobjekten und dem Träger in der Regel wässrige Lösungen (ebenfalls als Immersionsmedium identifizierbar) vorhanden. Es treten deswegen häufig jeweils nur geringe Brechungsindexunterschiede auf, die gleichwohl in der Regel eine für die Autofokussierung bzw. Scharfstellung hinreichende Rückreflexion liefern. Soweit die inhärent gegebene Rückreflexion nicht ausreicht, kann man den Objektträger mit einer entsprechenden Reflexionsbeschichtung, beispielsweise einer dielektrischen Beschichtung, an einer geeigneten Oberfläche oder Grenzfläche (Unterseite oder Oberseite einer Trägerplatte oder dergleichen) versehen.

Gemäß dem Beispiel der Fig. 1 wird der von der Anordnung 120 abgegebene Laserstrahl über den Beobachtungsstrahlengang 102 auf die Referenzebene R oder R' projeziert und dann über den Mikroskopstrahlengang 102 zurückreflektiert. Die betreffende Referenzebene R bzw. R' und dementsprechend das Projektionsmuster des Laserstrahls, ggf. der Fokuspunkt des Laserstrahls, in dieser Referenzebene R bzw. R' werden über den Mikroskopstrahlengang 102 in eine Zwischenbildebene ZB abgebildet, die bei der hier zugrunde gelegten Einstellung des Mikroskopstrahlengangs gegenüber der Bildebene 66 bzw. der lichtempfindlichen Oberfläche des Bildsensors versetzt ist. Der Pfeil G' in Fig. 1 symbolisiert das Abbild der die Referenzebene R bzw. R' bildenden Grenzfläche.

Ausgehend von einer momentanen Einstellung des Mikroskopstrahlengangs 102 kann die Anordnung 120, die einen den Mikroskopstrahlengang umfassenden Messstrahlengang 150 aufweist, ohne Verstellung des Mikroskopstrahlengangs 102 auf die jeweils vorgesehene Referenzebene (etwa R oder R') scharfgestellt bzw. fokussiert werden, wobei diese Scharfstellung bzw. Fokussierung vollautomatisch auf Grundlage einer Auswertung des rückreflektierten Laserstrahls erfolgen kann. Ist die Anordnung auf die Referenzebene scharfgestellt bzw. fokussiert, so kann auf Grundlage der betreffenden Einstellung des Messstrahlengangs die Scharfstellung des Mikroskopstrahlengangs 102 etwa in Bezug auf das Objekt O erfolgen, wobei die Referenzebene als Bezugsebene dient. Da eine Verstellung des Mikroskopstrahlengangs etwa durch Verschiebung des Objektivs 104 auch den Messstrahlengang 150 betrifft, kann dieser während der Verstellung des Mikroskopstrahlengangs 102 nachgeführt werden, um den Fokussierungs- bzw. Scharfstellzustand der Anordnung 120 zu erhalten. Die Referenzebene steht deswegen weiterhin als Bezugsebene für die mikroskopische Abbildung des Objekts O bzw. weiterer Objekte über den Mikroskopstrahlengang zur Verfügung.

Anhand Fig. 2 wird nun im Folgenden ein bevorzugtes Ausführungsbeispiel für eine als Anordnung 120 einsetzbare optische Anordnung erläutert, die im Folgenden auch kurz nur als "Autofokus-Sensor" bezeichnet wird. Der Autofokus-Sensor 120 weist einen Laser 140 beispielsweise in Form einer Laserdiode auf. Der vom Laser 140 ausgehende Laserstrahl wird über einen Strahlteiler 142 geführt und mittels einer Optik 144 ins Unendliche abgebildet. Das im Wesentlichen parallele Licht nach der Optik 144 fällt in eine mittels eines Aktuators 146 längs der optischen Achse B verstellbare Optik 148, die das Laserlicht in eine durch die Position der Optik 148 bestimmte Zwischenbildebene $ZB_1$ abbildet, nämlich fokussiert. Die Zwischenbildebene $ZB_1$ könnte an sich im Falle der Gesamt-Anordnung der Fig. 1 der Zwischenbildebene ZB entsprechen bzw. für die Scharfstellung bzw. Fokussierung des den Mikroskopstrahlengang 102 einschließenden Messstrahlengangs 150 mit dieser zur Deckung zu bringen zu sein. Aufgrund der Vergrößerung durch den Mikroskopstrahlengang 102 müsste hierfür aber für die Optik 148 ein entsprechend großer Verstellweg längs der optischen Achse B und ein dementsprechend einen großen Verstellweg bereitstellender Aktuator 146 vorgesehen werden. Um die Vergrößerung des Mikroskopstrahlengangs 102 vollständig oder teilweise rückgängig zu machen, weist der Messstrahlengang 150 einen eigenen Mikroskopstrahlengang 152 auf, mit einem Objektiv 154 und einer Tubuslinse 156. Dieser Mikroskopstrahlengang 152 ist entgegengesetzt zum Mikroskopstrahlengang 102 gerichtet und bildet zwischen der Zwischenbildebene $ZB_1$ und einer weiteren Zwischenbildebene $ZB_2$ ab.

Im Falle der Gesamt-Anordnung der Fig. 1 fallen die Zwischenbildebene $ZB_2$ und die durch den Mikroskopstrahlengang 102 und die Referenzebene R bzw. R' definierte Zwischenbildebene ZB dann zusammen, wenn der Messstrahlengang 150 in Bezug auf diese Referenzebene scharfgestellt bzw. fokussiert ist. In diesem Fall fällt das Abbild der die Referenzebene bildenden Grenzfläche in die Zwischenbildebene $ZB_2$ (= ZB, Abbild durch Pfeil G' repräsentiert) und dieses Abbild wird über den Mikroskopstrahlengang 152 weiter in die Zwischenbildebene $ZB_1$ abgebildet (Pfeil G'').

Aus der Zwischenbildebene $ZB_1$ wird die Grenzfläche bzw. die Laserstrahl-Rückreflexion an der Grenzfläche über die Optiken 148, 144 und den Strahlteiler 152 in eine Detektoreinheit 160 abgebildet. Das rückreflektierte Laserlicht fällt dabei über einen Strahlteiler 162 und eine Zylinderlinse 164 auf eine Quadranten-Photodiode 166. Zur Zylinderlinse 164 sei angemerkt, dass diese prinzipiell an beliebiger Stelle im Messstrahlengang 150 zwischen dem Laser 140 und der Quadranten-Photodiode 166 angeordnet sein könnte und bei einem Laser, der hinreichend astigmatisches Laserlicht liefert, auch weggelassen sein könnte.

Die Quadranten-Photodiode 166 dient dafür, die Form des reflektierten Laserlichtflecks in Folge des Astigmatismus des Laserlichts zu detektieren. Die optischen Abstände und die optischen Komponenten sind derart aufeinander abgestimmt, dass dann, wenn die Zwischenbildebene ZB und die Zwischenbildebene $ZB_2$ zusammenfallen und dementsprechend der Laserstrahl in die Referenzebene R bzw. R' fokussiert wird, die Quadranten-Photodiode 166 einen kreisförmigen Lichtfleck detektiert. Die vier Quadranten der Photodiode empfangen dann, eine entsprechende Justierung der Anordnung vorausgesetzt, jeweils die gleiche Lichtintensität.

Ist die Zwischenbildebene $ZB_2$ hingegen gegenüber der Zwischenbildebene ZB versetzt, liegt der Fokuspunkt des Laserstrahls am Ende des Mikroskopstrahlengangs 102 also nicht in der Referenzebene R bzw. R', so hat der auf die Quadranten-Photodiode 166 reflektierte Lichtfleck eine elliptische Gestalt, wobei die Orientierung der Ellipsenhauptachse relativ zu den Quadranten darüber Auskunft gibt, ob der Fokuspunkt vor oder nach der die Referenzebene bildenden Grenzschicht liegt. Es wird hierzu auf den grundlegenden Aufsatz "Automatic focus control: the astigmatic lens approach" von Donald K. Cohen et al., Applied Optics, Vol. 23, No. 4, S. 565-570, 15.02.1984, verwiesen. Ferner dürfte die eine spezielle Anwendung dieser Technik vorschlagende US 5,675,140 in diesem Zusammenhang von Interesse sein.

Mittels der Quadranten-Photodiode 166 kann also festgestellt werden, ob das Zwischenbild $ZB_2$ des Mikroskopstrahlengangs 152 und das Zwischenbild ZB des Mikroskopstrahlengangs 102 zusammenfallen oder nicht. Tritt ein elliptischer Lichfleck auf der Empfangsoberfläche der Quadranten-Photodiode 166 auf, so wird mittels des Aktuators 146 die Optik 148 längs der optischen Achse B verschoben, bis die genannten Zwischenbilder zusammenfallen und dementsprechend ein kreisförmiger Lichtfleck auf dem Detektor 166 erreicht ist. Die Form der Ellipse, genauer die Orientierung der Hauptachse des elliptischen Leuchtflecks, liefert eine eindeutige Aussage, auf welcher Seite der die Referenzfläche bildenden Grenzfläche der Laserfokus liegt, in welcher Richtung also die Optik 148 zu verstellen ist. Auf Grundlage der Detektion mittels der Quadranten-Photodide 166 kann eine automatische Fokussuche implementiert werden und kann der Messstrahlengang 150 im fokussierten Zustand gehalten werden, beispielsweise durch Vorsehen einer entsprechenden Regelschleife. Nachfolgend auftretende Verstellungen am Beobachtungsstrahlengang (Mikroskopstrahlengang) 102 können dabei durch entsprechendes Nachführen der Optik 146 ausgeglichen, ggf. herausgeregelt, werden.

Der erfindungsgemäße Autofokussensor 120 erlaubt ein gerichtetes Heranfahren des Aktuators 146 an eine die Fokussierung ergebende Fokussierungsstellung. Voraussetzung für eine Autofokussierung auf die beschriebene Art und Weise ist nur, dass es aufgrund eines Brechungsindexunterschieds oder einer Verspiegelung eine entsprechend reflektierende bzw. teilreflektierende Grenzfläche gibt. Dies ist in der Praxis fast immer der Fall. So weist ein Objektträger in der Regel immer einen Brechungsindexunterschied gegenüber der Umgebung des jeweiligen Untersuchungsobjekts bzw. dem Untersuchungsobjekt selbst auf. Im Falle von biologischen Objekten wird meist ein Trägermaterial aus Glas verwendet (Brechungsindex n beispielsweise etwa 1,4) und der Raum mit dem Untersuchungsobjekt ist in der Regel mit einer wässrigen Lösung gefüllt (Brechungsindex beispielsweise etwa 1,33). Damit wird zwingend ein Bruchteil des eingestrahlten Laserlichts reflektiert, und das reflektierte Licht kann über den Strahlteiler 142 in die Detektoreinheit 160 geführt werden zur Auswertung mittels der Quadranten-Photodiode 166.

Aufgrund der ggf. vergleichsweise geringen Brechungsindexunterschiede könnte es allerdings unter Umständen passieren, dass über die Detektion mittels der Quadranten-Photodiode fehlerhaft auf einen internen Reflex fokussiert wird. Um dies zuverlässig zu vermeiden, ist eine weitere Photodiode 170 vorgesehen, die im Falle einer regulären Rückreflexion durch die die Referenzebene definierende Grenzschicht über ein Pinhole 172 von dem Strahlteiler 162 einen Teil der in die Detektoreinheit 160 eintretenden rückreflektierten Laserlichtintensität empfängt. Die auf den Detektor 170 fallende Laserlichtintensität ist ein Maß für die reflektierte Gesamtintensität und ermöglicht eine zuverlässige Unterscheidung zwischen regulären Rückreflektionen durch die Grenzschicht und sonstigen internen Reflexen.

Im Hinblick auf geringe Brechungsindexunterschiede und damit geringe Intensitäten des rückreflektierten Laserlichts, sowie auf störende Fremdlichteinflüsse (z. B. Umgebungslicht, Mikroskopbeleuchtung usw.) kann man für eine besonders zuverlässige Detektion mittels der Quadranten-Photodiode 166 oder/und des Detektors 170 eine phasenempfindliche Detektion mittels so genannter Lock-In-Technik vorsehen. Hierzu kann der Laser 140 moduliert werden oder dem Laser ein Intensitätsmodulator nachgeschaltet werden und der Detektor 166 bzw. der Detektor 170 an einem entsprechenden Lock-In-Verstärker oder dergleichen angeschlossen sein.

Eine weitere vorteilhafte Maßnahme in diesem Zusammenhang kann sein, zur Erhöhung des den reflektieren Anteil bestimmenden Brechungsindexunterschieds den Objektträger mit geeigneten dielektrischen Schichten oder einer geeigneten Verspiegelung zu versehen. Beispielsweise kann man im Falle einer Mikrotiterplatte eine den Boden der Objektaufnahmegefäße (Wells) bildende Bodenplatte (in der Regel eine Glasplatte) mit einem geeigneten dielektrischen Schichtensystem oder zumindest einer geeigneten dieelektrischen Schicht versehen, z. B. bedampfen oder besputtern. Die dielektrische Schicht bzw. das dielektrische Schichtensystem kann so gewählt werden, dass primär nur die Laserwellenlänge reflektiert wird, nicht aber im wesentlichen Ausmaß die die eigentliche Objektuntersuchung betreffenden Lichtwellenlängen, etwa über den Mikroskopstrahlengang 102 zum Objekt geleuchtetes Beleuchtungslicht bzw. vom Objekt ausgehendes, über den Mikroskopstrahlengang 102 in die Bildebene 66 abzubildendes Beobachtungslicht. Bezogen auf fluoreszenzmikroskopische Anwendungen sollte im Falle einer Einstrahlung des zur Anregung der Fluoreszenz nötige Licht über den Mikroskopstrahlengang 102 dieses nicht oder nicht wesentlich an der dielektrischen Beschichtung reflektiert werden und jedenfalls nicht das resultierende, vom Untersuchungsobjekt emittierte Fluoreszenzlicht, das auf den Bildsensor 74 in der Bildebene 66 abzubilden ist. Einen gewissen minimalen Reflektionsgrad auch für derartige Wellenlängen wird man in der Praxis aber durchaus in Kauf nehmen können.

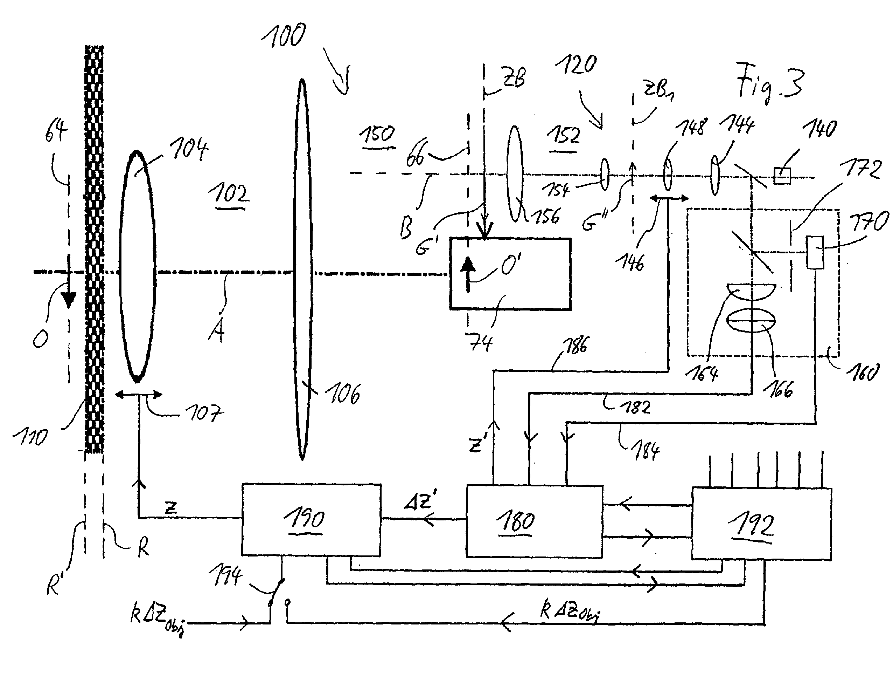

Fig. 3 zeigt schematisch die Objektuntersuchungseinrichtung 100 der Fig. 1 mit dem Autofokussensor 120 der Fig. 2. Wie an sich auch schon in Fig. 1 zu erkennen, ist der Autofokussensor 120 gewissermaßen "neben" dem Bildsensor 74 angeordnet. Dies ist in der Regel möglich, da ein Mikroskopobjektiv meist einen größeren Bereich abbildet, als ein üblicher Bildsensor (etwa CCD-Feld) aufnimmt. Zu erkennen ist die zueinander entgegengesetzte Richtung der beiden Mikroskopstrahlengänge 102 und 150. Der Mikroskopstrahlengang 102 bildet die dem Objektträger 110 zugeordnete Grenzschicht bzw. Referenzebene vergrößert in die Zwischenbildebene ZB ab. Der Mikroskopstrahlengang 152 bildet hingegen aus der Zwischenbildebene ZB$_1$ vergrößert in die Zwischenbildebene ZB ab bzw. umgekehrt aus der Zwischenbildebene ZB verkleinert in die Zwischenbildebene ZB$_1$ ab. Zu erkennen ist ferner der Versatz zwischen der Bildebene 66 und der Zwischenbildebene ZB entlang den optischen Achsen A und B, wie dies beispielsweise einerseits einer Scharfstellung des Mikroskopstrahlengangs 102 auf das Objekt O und einem entsprechend scharfen Bild O' in der Bildebene 66 und andererseits einer Fokussierung bzw. Scharfstellung des den Mikroskopstrahlengang 102 umfassenden Messstrahlengangs 150 in Bezug auf die Referenzebene (Grenzfläche des bzw. am Objektträger(s) 110) entspricht.

Der Abstand zwischen der Bildebene 66 und der Zwischenbildebene ZB ist durch Verstellung der Optik 148 oder/und der Optik 104 mittels des Aktuators 146 bzw. 107 einstellbar, so dass verschiedene Abstände zwischen einem jeweiligen Objekt bzw. einer jeweiligen, zu untersuchenden Objektebene und der die Referenzebene definierenden Grenzfläche berücksichtigt werden können.

In Fig. 3 ist neben den schon behandelten optischen Komponenten auch zugehörige, nur ein Beispiel gebende Elektronik schematisch dargestellt. Eine Steuer-/Regeleinheit 180 empfängt über Leitungen 182 von der Quadranten-Photodiode 166 wenigstens vier die optischen Intensitäten auf den vier Quadrantenfeldern der Diode repräsentierende oder hieraus abgeleitete Signale. Ferner empfängt die Steuer-/Regeleinheit 180 über wenigstens eine Leitung 184 ein die Intensität auf dem Detektor 170 repräsentierendes Signal. Über eine Leitung 186 steuert die Steuer-/Regeleinheit den Aktuator 146 der Optik 148 an, so dass etwa ein Z-Trieb des Autofokussensors 120 für die Optik 148 eine Position Z' längs der optischen Achse B einstellt. Es sei hier angenommen, dass die eingestellte Position der Optik 148 darstellbar ist als

$$Z' = Z'_0 + \Delta Z' = Z'_0 + \Delta Z'_1 + \Delta Z'_2,$$

wobei die Konstante $Z'_0$ beispielsweise für einem Offsetwert oder Nullwert im Falle einer Nichtbetätigung des Aktuators 146 entsprechen kann und ohne weiteres für die Betrachtungen hier gleich Null gesetzt werden kann.

Die Stellgröße $\Delta Z'$ kann man sich ohne Beschränkung der Allgemeinheit aus einem Beitrag $\Delta Z'_1$ und einem Beitrag $\Delta Z'_2$ additiv zusammengesetzt denken, um eine momentane Einstellung des Beobachtungsstrahlengangs 102 auf anschauliche Weise berücksichtigen zu können. Es sei hier angenommen, dass dann, wenn der Mikroskopstrahlengang 102 auf die die Referenzebene R bzw. R' definierende Grenzfläche scharfgestellt ist, so dass diese Grenzfläche scharf in die Bildebene 66 abgebildet wird, der Beitrag $\Delta Z'_2$ verschwindet, also gleich Null ist, und der Messstrahlengang 150 dann scharfgestellt bzw. auf die beschriebene Art und Weise fokussiert ist (Zusammenfall der Zwischenbildebenen ZB und ZB$_2$), wenn die Optik 148 die Position $Z' = Z'_0 + \Delta Z'_1$ einnimmt, also der Aktuator 146 die Optik 148 entsprechend dem Stellwert $\Delta Z'_1$ entlang der optischen Achse B positioniert.

Eine weitere Steuer-/Regel-Einheit 190 ist dem Mikroskopstrahlengang 102 zugeordnet und steuert den Aktuator 107 für das Objektiv 104 an. Ohne Beschränkung der Allgemeinheit kann man annehmen, dass die Position des Objektivs 104 längs der optischen Achse A darstellbar ist als

$$Z = Z_0 + \Delta Z = Z_0 + \Delta Z_{AF} + \Delta Z_{Obj}.$$

Die Konstante $Z_0$ kann wiederum als Offsetwert oder Nullwert des Aktuators aufgefasst werden und kann für die Betrachtungen hier ohne weiteres gleich Null angenommen werden.

Ohne Beschränkung der Allgemeinheit ist wieder angenommen, dass die Verstellung des Objektivs 104 durch zwei additive Beiträge beschreibbar ist, wobei bei der vorstehend angesprochenen Situation einer Scharfstellung des Beobachtungsstrahlengangs 102 auf die Referenzebene, also die Abbildung der Referenzebene in die Bildebene 66 der Beitrag $\Delta Z_{Obj}$ verschwindet, also gleich Null ist und der Beitrag $\Delta Z_{AF}$ gerade die die genannte Scharfstellung des Beobachtungs- bzw. Mikroskopstrahlengangs 102 auch die Referenzebene ergibt. Stellt man hingegen auf eine andere Ebene im Bildbereich, etwa auf das Objekt O scharf, so kommt zum im Bezug auf die Referenzebene als Konstante aufzufassenden Beitrag $\Delta Z_{AF}$ additiv noch der die Verstellung gegenüber dem Scharfstellzustand im Bezug auf die Referenzebene angebende, vom Abstand der betreffenden Objektebene zur Referenzebene abhängige Beitrag $\Delta Z_{Obj}$ hinzu.

Ist der Mikroskopstrahlengang 102 auf die die Referenzebene bildende Grenzfläche scharfgestellt, so gilt der Zusammenhang

$$\Delta Z_{AF} = f(\Delta Z'_1).$$

Die Funktion f beschreibt einen zumindest kalibrierbaren, zumindest in Form von Kennfeldern darstellbaren Zusammenhang zwischen der die Fokussierung des Messstrahlengangs 150 auf die die Referenzebene bildende Grenzfläche ergebenden Z-Einstellung der Optik 148 und einer eine scharfe Abbildung dieser Grenzfläche in die Bildebene 66 ergebenden Einstellung des Objektives 104 mittels des Aktuators 107.

Für eine Scharfstellung des Mikroskopstrahlengangs 102 auf eine gegenüber der Referenzebene versetzte Objektebene tritt zum auf Grundlage der Vorgabe $\Delta Z'_1$ durch die Einheit 180 bestimmten bzw. bestimmbaren Stellwert $\Delta Z_{AF}$ additiv der zusätzliche Beitrag $\Delta Z_{Obj}$ hinzu, um den das Objektiv 104 weiter zu verschieben bzw. zurückzuschließen ist, so dass nun nicht die Referenzebene, sondern die gewünschte, zur Referenzebene versetzte Bildebene scharf auf den Bildsensor abgebildet wird. Durch die betreffende Verstellung des Mikroskopstrahlengangs 102 resultiert zum Aufrechterhalten des Fokussierungs- bzw. Scharfstellzustands des Messstrahlengangs in Bezug auf die Referenzebene eine diese Verstellung für den Messstrahlengang 152 insgesamt gewissermaßen rückgängig machende bzw. aufhebende zusätzliche Verstellung des Messstrahlengangs 150 mittels des Aktuators 146, so dass zu dem für die momentane Messsituation als konstant annehmbaren Stellwert $\Delta Z'_1$ noch der "Korrekturbeitrag" $\Delta Z'_2$ additiv hinzu tritt. Es sei angemerkt, dass wenn hier von einem "additiven Hinzutreten" oder einer "additiven Zusammensetzung" die Rede ist, dies auch eine substraktive Verknüpfung zweier Werte einschließt. Über das Vorzeichen der Größen $\Delta Z'$, $\Delta Z'_1$, $\Delta Z'_2$, $\Delta Z_{AF}$ und $\Delta Z_{Obj}$ ist vorliegend also keine Aussage gemacht worden.

Im genannten Zustand, das der Mikroskopstrahlengang 102 auf eine gegenüber der Referenzebene versetzte Objektebene scharfgestellt ist, gilt der zumindest kalibrierbare, zumindest in Form von Kennfeldern darstellbare allge-

meinere Zusammenhang

$$\Delta Z_{AF} = f(\Delta Z').$$

Auf Grundlage des erläuterten Zusammenhangs

$$\Delta Z_{AF} = f(\Delta Z'),$$

der ggf. auch die Form

$$\Delta Z_{AF} = f(\Delta Z', Z_M)$$

annehmen kann ($Z_M$ repräsentiert dabei eine momentane Einstellung des Beobachtungs- oder Mikroskopstrahlengangs 102), sowie auf Grundlage einer erfolgten Autofokussierung des Autofokussensors 120 (Stellgröße $\Delta Z'$) kann somit der Mikroskopstrahlengang 102 ausgehend von seiner momentanen Einstellung unmittelbar auf die Referenzebene scharfgestellt werden. Hierzu erhält gemäß dem Beispiel der Fig. 3 die Steuer-/Regel-Einheit als Referenzwert die Stellgröße $\Delta Z'$ von der Steuer-/Regel-Einheit 180.

Für eine definierte Verstellung des Mikroskopstrahlengangs 102 gegenüber der Scharfstellung auf die Referenzebene kann der Einheit 190 beispielsweise von einem manuell betätigten Stellelement eine Verstellgröße $k\Delta Z_{Obj}$ zugeführt werden, so dass man beispielsweise ausgehend von der Scharfstellung auf die Referenzebene auf Grundlage des über den Bildsensor, etwa auf einem Monitor gesehenen Bildes eine interessierende Objektebene suchen und scharf einstellen kann. Die die Grundlage für diese Scharfeinstellung bildende Scharfeinstellung auf die Referenzebene kann hingegen voll automatisiert vermittels des Autofokussensors 120 erfolgen.

Symbolhaft ist in Fig. 3 zusätzlich eine übergeordnete Steuereinheit 192 eingezeichnet, die Signale von der Einheit 180 oder/und von der Einheit 190 sowie ggf. weitere Signale empfängt oder/und die Einheit 180 oder/und die Einheit 190 sowie ggf. weitere Komponenten ansteuert, wie durch Leitungen und Pfeile repräsentiert. Es wird speziell an eine derartige Ansteuerung der Einheit 190 gedacht, dass dieser eine gewünschte Verstellung des Mikroskopstrahlengangs 102 relativ zur Scharfeinstellung auf die Referenzebene vorgegeben wird. Hierzu kann der Einheit 190 über einen Schalter 194 anstelle des manuellen Vorgabesignals $k\Delta Z_{Obj}$ ein entsprechendes, von der übergeordneten Einheit 192 generiertes Vorgabesignal $k\Delta Z_{Obj}$ vorgegeben werden. Es sei angemerkt, dass die Größe k nur eine beliebige Konstante repräsentiert, die ohne weiteres auch gleich eins gewählt werden könnte. Es empfiehlt sich aber, für eine manuelle Verstellung eine "Spreizung" des manuell zu generierenden Signals vorzusehen, so dass eine feinfühlige Einstellung des Mikroskopstrahlengangs 102 möglich ist.

Angemerkt sei noch, dass es sich bei den hier erwähnten Signalen nicht zwingend um analoge Signale handeln muss. Der Begriff "Signal" soll hier auch rein digitale Daten mit umfassen. Die verschiedenen angesprochenen "Einheiten" können auch für Softwarefunktionalitäten stehen, brauchen also nicht unbedingt hardwaremäßig ausgeführt sein.

Zum Zusammenhang zwischen einer momentanen Fokussierungseinstellung des Messstrahlengangs 150 einerseits und einer eine Scharfeinstellung des Mikroskopstrahlengang 102 in Bezug auf die Referenzebene ($\Delta Z_{AF} = f(\Delta Z'_1)$ bzw. $\Delta Z_{AF} = f(\Delta Z')$ bzw. eine hierzu versetzte Bildebene ($\Delta Z = \Delta Z_{AF} + \Delta Z_{Obj}$) ist zu sagen, dass dieser Zusammenhang auf jeden Fall kalibrierbar ist und zumindest mittels Kennfeldern darstellbar ist. Für viele Situationen kann aber ohne weiteres sogar ein linearer Zusammenhang angenommen werden. Hieraus ergibt sich, dass auf Grundlage der Autofokussierung des Sensors 120 in Bezug auf die Referenzebene ohne wesentliche weitere Maßnahmen unmittelbar der Mikroskopstrahlengang 102 in Bezug auf diese Referenzebene oder eine gegenüber dieser versetzte Bildebene scharfstellbar ist. Soweit ein Abstand zwischen einer interessierenden Objektebene und der Referenzebene exakt bekannt ist, ist der benötigte Z-Einstellwert für das Objektiv 104 im Prinzip ohne weiteres einstellbar, ohne dass es noch etwa einer Auswertung des auf den Bildsensor fallenden Bildes bzw. der Anwendung irgendwelcher Scharfstell- bzw. Autofokussierungsalgorithmen bedarf. In der Praxis wird der Abstand zwischen einem interessierenden Objekt und etwa einem Boden des Objektträgers variieren und auch der Objektträger selbst geometrische Abweichungen von einer Idealgestalt aufweisen. Es kann dann aber in der Regel gleichwohl für sehr viele Messsituationen von einem typischen Abstand zwischen einer interessierenden Bildebene bzw. dem interessierenden Objekt einerseits und der durch den Objektträger definierten Referenzebene, auf die der Autofokussensor automatisch fokussiert, andererseits ausgegangen werden, so dass nach Anfahren der "typischen" Objektebene nur noch eine gewisse Restunschärfe durch Nachstellen des Mikroskopstrahlengangs 102 zu beseitigen ist. Dies kann auf Grundlage von herkömmlichen Software-Autofokusmethoden bei geringem Datenverarbeitungsaufwand schnell erreicht werden, soweit man nicht auf die "Datenverarbeitung" des menschlichen Gehirnes setzt.

Man mag sich fragen, warum bei den Beispielen der Fig. 1 bis 3 erst außerhalb des Mikroskopstrahlengangs 102 mittels einer gesonderten aktuatorverstellbaren Optik 148 der Messstrahlengang des Autofokussensors scharfgestellt bzw. fokussiert wird und nicht von vornherein mittels des Aktuators 102 der Mikroskopstrahlengang 102 verstellt wird. Der Vorteil der hier beschriebenen Lösung ist zum einen, dass die Optik 148 eine deutlich kleinere Masse als das Objektiv 104 aufweisen kann, so dass gegenüber einer Verstellung des Objektivs 104 deutlich geringere Stellkräfte ausreichen und - besonders wichtig - sehr viel kürzere Stellzeiten möglich sind.

Ein weiterer, sehr gewichtiger Vorteil ist, dass die voneinander unabhängige Scharfstellung des Mikroskopstrahlengangs 102 auf eine interessierende Objektebene einerseits und die hiervon unabhängige, höchstens eine Verstellung des Objektivs 104 ausgleichende Verstellung des Messstrahlengangs 150 für eine Scharfstellung bzw. Fokussierung in Bezug auf die Referenzebene andererseits es möglich machen, dass bei einem Verfahren etwa eines Mikroskoptisches die die Referenzebene definierende Grenzfläche durch den Autofokussensor weiterverfolgt werden kann, der Autofokussensor - erforderlichenfalls unter entsprechender Nachstellung mittels des Aktuators 146 - also im Scharfstell- bzw. Fokussierungszustand in Bezug auf die Grenzfläche gehalten werden kann, ohne dass die momentan über den Beobachtungsstrahlengang 102 scharf abgebildete Objektebene relativ zum Objektiv 104 verändert wird bzw. verändert werden muss. Dies ist insbesondere bei Mikrotiterplatten und anderen eine Vielzahl von Objekten haltenden Objektträgern von großem Vorteil, da in der Praxis große Unebenheiten, etwa der Boden- bzw. Trägerplatte der Mikrotiterplatte auftreten können. Während des Verfahrens des Mikroskoptisches wird der Autofokussensor 120 entsprechend dem Verlauf der Grenzschicht und damit dem Verlauf der Referenzebene nachgeführt, was einfach auf Grundlage eines die Quadranten-Photodiode 166, die Einheit 180 und den Aktuator 156 umfassenden Regelkreises bewerkstelligt werden kann. Bei einem Verfahren des Mikroskoptisches zu einem weiteren Objekt bzw. einem weiteren Well der Mikrotiterplatte kann so das jeweils interessierende Untersuchungsobjekt schnell wiedergefunden, d. h. erneut scharf auf den Bildsensor abgebildet werden. Der Verlauf der Grenzfläche, die sich beim Verfahren des Mikroskoptisches für den Autofokussensor 120 in einem sich ändernden Abstand der Grenzfläche entlang der optischen Achse B von einer Bezugsebene, etwa einer Hauptebene des Objektives 104, zeigt, liefert über die Quadranten-Photodiode 166 eine Richtungsinformation, die eine gezielte Nachstellung des Messstrahlengangs 120, beispielsweise durch die angesprochene Regelung, ermöglicht. Selbst große Unebenheiten von Mikrotiterplatten oder dergleichen können so ohne Erfordernis einer völlig neuen Autofokussierung des Autofokussensors 120 beherrscht werden. Sollte doch einmal eine Nachstellung etwa aufgrund zu großer seitlicher Verstellgeschwindigkeit des Mikroskoptisches erforderlich sein, so kann die jeweilige Fokussierungseinstellung des Messstrahlengangs 150 und damit die Referenzeinstellung für den Mikroskopstrahlengang 102 schnell gezielt wieder aufgefunden werden, wie beschrieben auf Grundlage der durch die Quadranten-Photodiode 166 gelieferten Richtungsinformation. Angemerkt sei noch, dass neben Quadranten-Photodioden auch andere Detektoren und Detektoranordnungen in Betracht kommen, die eine entsprechende Auswertung des rückreflektierten Laserlicht-Leuchtflecks ermöglichen. Man könnte beispielsweise ein ortsempfindliches Detektorfeld verwenden, das - je nach Auflösung - ggf. "gutmütiger" in Bezug auf seitliche Fehljustagen sein könnte.

Es sind im Prinzip vielfältige Ausgestaltungen einer erfindungsgemäßen Objektuntersuchungseinrichtung und der Scharfstell- oder Autofokus-Anordnung, ggf. des Autofokussensors, der Objektuntersuchungseinrichtung möglich. Ferner kann, wie unten noch näher erläutert, auch eine Scharfstell- oder Autofokus-Anordnung, ggf. ein Autofokussensor der beschriebenen Art, unabhängig von einer optischen Objektuntersuchungseinrichtung für verschiedene Zwecke vorteilhaft eingesetzt werden. Je nach Anwendungsbereich und Zuordnung zu anderen optischen Komponenten wird die eigentliche Detektoreinheit 160 (gestrichelter Block in Fig. 2 und in Fig. 3) unterschiedlich aufgebaut bzw. ausgestaltet sein.

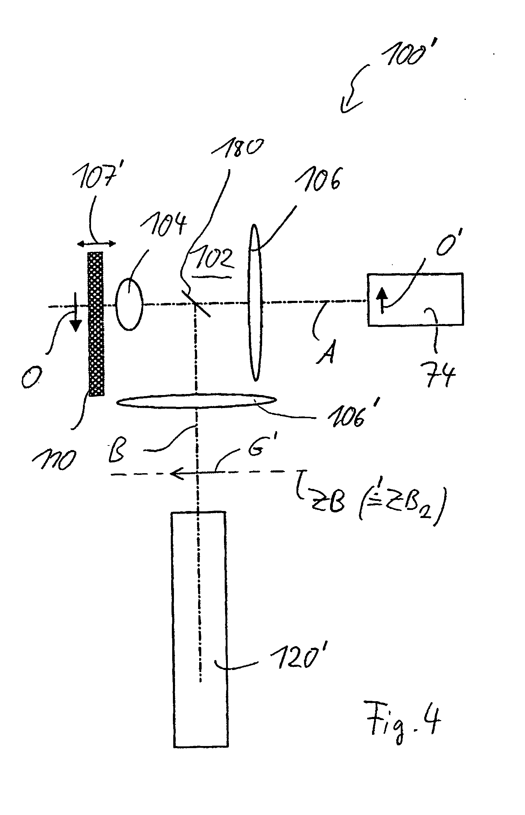

Fig. 4 veranschaulicht ein Beispiel einer erfindungsgemäßen Objektuntersuchungseinrichtung 100', bei der die automatische Scharfstell- oder Autofokus-Anordnung 120' eine unter einem Winkel (ggf. 90°) zur optischen Achse A des Mikroskopstrahlengangs 102 sich erstreckende optische Achse B aufweist. Der durch eine gegenüber der Tubuslinse 106 des Mikroskopstrahlengangs 102 gesonderte Tubuslinse 106' hindurch tretende Laserstrahl wird über einen Strahlteiler 180 in den Mikroskopstrahlengang 102 eingekoppelt. Das an der die Referenzebene definierenden Grenzfläche rückreflektierte Laserlicht wird über diesen Strahlteiler 180 dann wieder aus dem Mikroskopstrahlengang 102 ausgekoppelt und entlang der optischen Achse B zur Detektion dem Sensor 120' zugeführt. Es sei noch darauf hingewiesen, dass in Fig. 4 durch den Doppelpfeil 107' eine Verstellung des Objektträgers entlang der optischen Achse A mittels eines entsprechenden Z-Triebs angedeutet ist. Das Objektiv 104 kann also entlang der optischen Achse A eine ortsfeste Position aufweisen, und es wird der Objektträger 110 mittels eines entsprechenden Mikroskoptisches oder dergleichen und eines zugeordneten Aktuators 107' verstellt. Ansonsten herrschen im Prinzip die gleichen Verhältnisse wie bei den Anordnungen der Fig. 1 bis 3, und es ist insbesondere eine durch das Objektiv 104 und die Tubuslinse 106' definierte Zwischenbildebene ZB mit einer durch den Sensor 120' bestimmten Zwischenbildebene $ZB_2$ in Übereinstimmung zu bringen bzw. - anders ausgedrückt - der Laserstrahl in Bezug auf die Grenzfläche scharf abzubilden bzw. zu fokussieren durch entsprechende Verstellung wenigstens eines optischen Elements des Autofokussensors 120' (allgemein der Scharfstell- oder Autofokus-Anordnung).

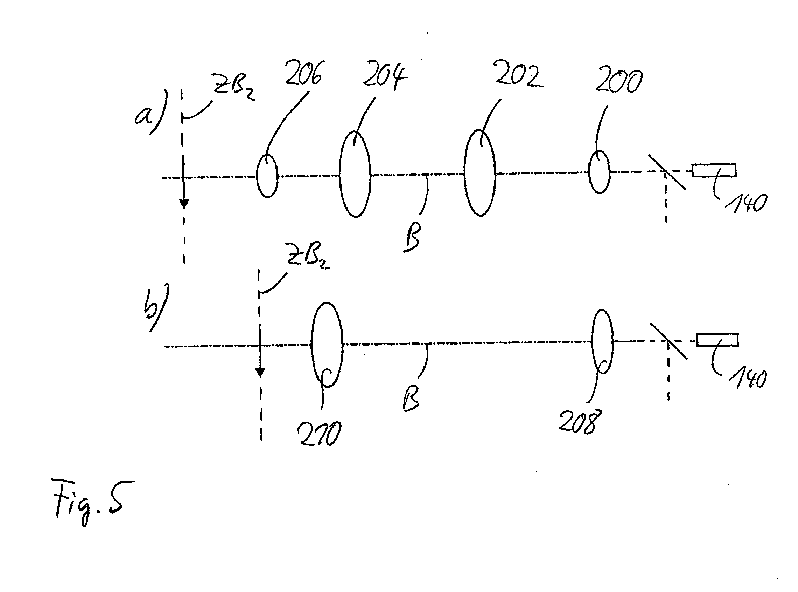

Betreffend den optischen Aufbau der Scharfstell- bzw. Autofokus-Anordnung im Allgemeinen und speziell hinsichtlich der Führung des Laserstrahls bzw. des Laserlicht-Rückreflexes längs der optischen Achse B bestehen grundsätzlich vielfältige Möglichkeiten, wie in Fig. 5 schematisch dargestellt ist. So kann beispielsweise nach Fig. 5a die Abbildung des vom Laser 140 gelieferten Laserlichts in die Zwischenbildebene ZB$_2$ über insgesamt vier Linsen entsprechend einem ersten, paralleles Laserlicht ergebenden Linsenpaar 200, 202 und einem nachfolgenden, das Laserlicht in die Ebene ZB$_2$ fokussierenden Linsenpaar 204, 206 erfolgen. Wenigstens eine dieser Linsen, vorzugsweise wenigstens eines der Linsenpaare ist mittels eines zugeordneten Aktuators längs der Achse B verstellbar. Ein weiteres schematisches Beispiel zeigt Fig. 5b). Zur Abbildung des Laserlichts in die Zwischenbildebene ZB$_2$ sind zwei Linsen 208, 210 vorgesehen, von denen wenigstens eine längs der optischen Achse B mittels eines zugeordneten Aktuators verstellbar ist.

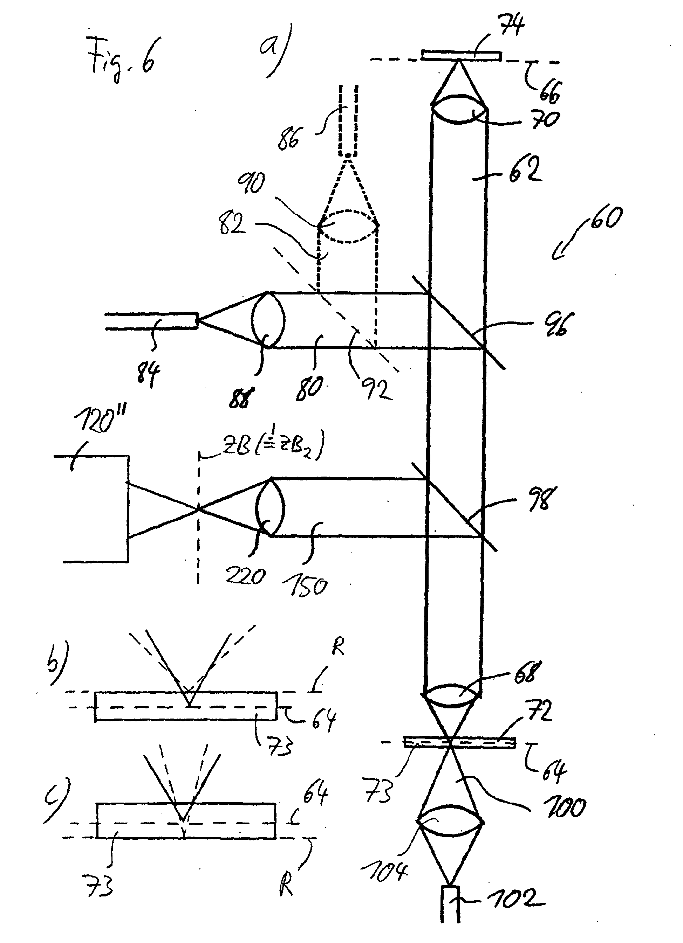

Ein weiteres Beispiel für eine erfindungsgemäße optische Objektuntersuchungseinrichtung soll im Folgenden anhand von Fig. 6 erläutert werden. Gezeigt ist eine Mikroskopanordnung 60, die beispielsweise für fluoreszenzmikroskopische Anwendungen vorgesehen ist. Es wird beispielsweise an Anwendungen gedacht, wie sie in den Patentschriften DE 41 15 401 C2 und DE 42 28 366 C2 angesprochen sind.

Die Mikroskopanordnung 60 weist einen Beobachtungsstrahlengang 62 auf, der eine Objektebene 64 in eine Bildebene 66 abbildet. Die Abbildung erfolgt mittels einer wenigstens zwei Linsen oder Objektive 68 und 70 aufweisenden Abbildungsanordnung, wie im Stand der Technik an sich bekannt. Für Messungen bzw. Untersuchungen kann in der Objektebene 64 ein Objekt 72 bzw. ein Objektträger 73 mit wenigstens einem Objekt 72 angeordnet sein. In der Bildebene 66 kann eine Detektoranordnung, beispielsweise ein einzelner Detektor (etwa Halbleiterdetektor) oder - für zweidimensionale Auflösung - ein Detektorfeld (etwa CCD-Chip) angeordnet sein. Ein entsprechender ortsauflösender Detektor ist in Fig. 6 mit 74 bezeichnet.

Die Mikroskopanordnung der Fig. 6 weist zwei Auflicht-Befeuchtungsstrahlengänge 80 und 82 auf, die über einen jeweiligen Lichtleiter 84 bzw. 86 mit Beleuchtungslicht aus einer zugeordneten Beleuchtungsvorrichtung versorgt werden können. Fig. 6 zeigt die spezielle Möglichkeit auf, dass die beiden Auflicht-Beleuchtungsstrahlengänge 80 und 82 mittels eines dichroitischen Spiegels 92 zusammengeführt und dann gemeinsam über einen dichroitischen Spiegel 96 in den Beobachtungsstrahlengang 62 eingespiegelt werden. Die gestrichelte Darstellung des Beleuchungsstrahlengangs 82 und der zugehörigen Komponenten (Linse 90, Lichtleiter 86 und Spiegel 92) soll deutlich machen, dass auch nur ein einziger Beleuchtungsstrahlengang, nämlich der Beleuchtungsstrahlengang 80, vorgesehen sein könnte. Grundsätzlich können auch mehr als zwei Auflicht-Beleuchtungsstrahlengänge vorhanden sein.

Das aus dem jeweiligen Lichtleiter austretende Licht wird mittels einer geeigneten Abbildungsoptik (durch Linse 88 bzw. 90 repräsentiert) in den jeweiligen Beleuchtungsstrahlengang eingekoppelt, beispielsweise derart, dass eine so genannte "kritische Beleuchtung" erreicht wird, bei der das benötigte Gesichtsfeld gleichmäßig mit Licht aus dem jeweiligen Lichtleiter ausgeleuchtet wird. Hierzu wird das Austrittsende des jeweiligen Lichtleiters in die Objektebene 64 abgebildet. Es können auch andere Beleuchtungsarten, z. B. die so genannte Köhler'sche Beleuchtung, realisiert sein.

Das Vorsehen der beiden bzw. von wenigstens zwei Auflicht-Beleuchtungsstrahlengängen ermöglicht, das Objekt 72 gleichzeitig mit Licht zweier verschiedener Wellenlängen zu beleuchten. Beispielsweise kann mittels des Strahlengangs 80 das benötigte Gesichtsfeld gleichmäßig in Auflicht ausgeleuchtet werden (etwa die angesprochene "kritische Beleuchtung"). Über den Strahlengang 82 kann zusätzlich Licht einer anderen Wellenlänge in die Objektebene eingestrahlt werden, beispielsweise um im Objekt so genannte "Käfigverbindungen" zu aktivieren, so dass diese im "Käfig" bereitgehaltene Stoffe freisetzen, die beispielsweise Kanäle von biologischen Zellen im Sinne eines Öffnens schalten. Derartige Käfigverbindungen können durch Einstrahlung von UV-Licht gezielt aktiviert werden. Das zur Freisetzung der wirksamen Stoffe benötigte UV-Licht kann gemäß dem hier angesprochenen Beispiel über den Strahlengang 82 in die Objektebene 64 eingestrahlt werden, wobei es durchaus sinnvoll sein kann, ebenfalls eine "kritische Beleuchtung" der Objektebene mit dem UV-Licht vorzusehen. Das über den anderen Auflicht-Strahlengang 80 eingestrahlte Beleuchtungslicht kann bei den hier angesprochenen fluoreszenzmikroskopischen Anwendungen insbesondere zur Anregung von Fluoreszenzstrahlung dienen.

Zusätzlich kann die Mikroskopanordnung 60 der Fig. 6 noch einen Durchlicht-Strahlengang 100 aufweisen, der mittels eines Lichtleiters 102 mit Beleuchtungslicht aus einer Beleuchtungsvorrichtung versorgt werden kann. Die Durchlicht-Beleuchtung des Objekts 72 kann beispielsweise derart erfolgen, dass mittels einer entsprechenden Optik 104 das Ausgangsende des Lichtleiters 102 in die Objektebene 64 abgebildet wird. Es sind auch andere im Fachgebiet bekannte Beleuchtungsarten geeignet.

Der Durchlicht-Beleuchtungsstrahlengang 100 kann vorteilhaft in Kombination etwa mit dem Auflicht-Beleuchtungsstrahlengang 80 verwendet werden, um bei einer Untersuchung, insbesondere beispielsweise speziell eine Bildaufnahme, zwischen einer Beleuchtung "Auflicht-Fluoreszenz" und einem "Durchlicht-Kontrastverfahren" umschalten zu können.

Die Mikroskopanordnung der Fig. 6 ist mit einer erfindungsgemäßen Scharfstell-oder Autofokus-Anordnung 120", ggf. einem Autofokussensor 120" wie erläutert, ausgeführt. Das vom Sensor 120" abgestrahlte Laserlicht wird über die Zwischenbildebene ZB, die im Scharfstell- bzw. fokussiertem Zustand der Zwischenbildebene $ZB_2$ entspricht, und wenigstens eine weitere Optik 220 sowie einen dichroitischen Spiegel 98 oder dergleichen in den Beobachtungsstrahlengang 62 eingekoppelt und auf eine geeignete bzw. ausgewählte Grenzfläche des Objektträgers 62 abgebildet bzw. fokussiert, die als Referenzebene R dient. Ein Laserlicht-Rückreflex wird auf dem gleichen Weg in den Sensor 120" zurückgestrahlt und ermöglicht die Autofokussierung bzw. Scharfstellung des Sensors 120' bzw. des Messstrahlengangs 150. Auf Grundlage des Scharfstell- bzw. Autofokussierungsergebnisses des Sensors 120" kann auf die oben erläuterte Weise der Beobachtungsstrahlengang 62 in Bezug auf das Objekt bzw. die Objektebene 64 scharf eingestellt werden, wobei die Referenzebene R bzw. die diese bildende Grenzfläche vor oder nach der Bildebene 64 liegen kann, wie in den Teilfiguren 6b) und 6c) symbolhaft gezeigt. Gestrichelt ist die hier angenommene Fokussierung des Laserlichts in die Referenzebene R symbolhaft dargestellt, während die Scharfstellung des Beobachtungsstrahlengangs 62 in durchgezogenen Linien symbolhaft dargestellt ist.

Es sei angemerkt, dass für die Ausführung der Mikroskopanordnung 60 sowohl die Invers-Bauart als auch die traditionelle Aufrecht-Bauart in Betracht kommt. Für Objekte, die das Laserlicht übermäßig abschatten oder ggf. sogar absorbieren würden, ist die Invers-Bauart besonders zweckmäßig, da dann eine an der Unterseite des Objektträgers vorgesehene Grenzschicht für die Reflexion des Laserlichts herangezogen werden kann (vgl. Fig. 6b).

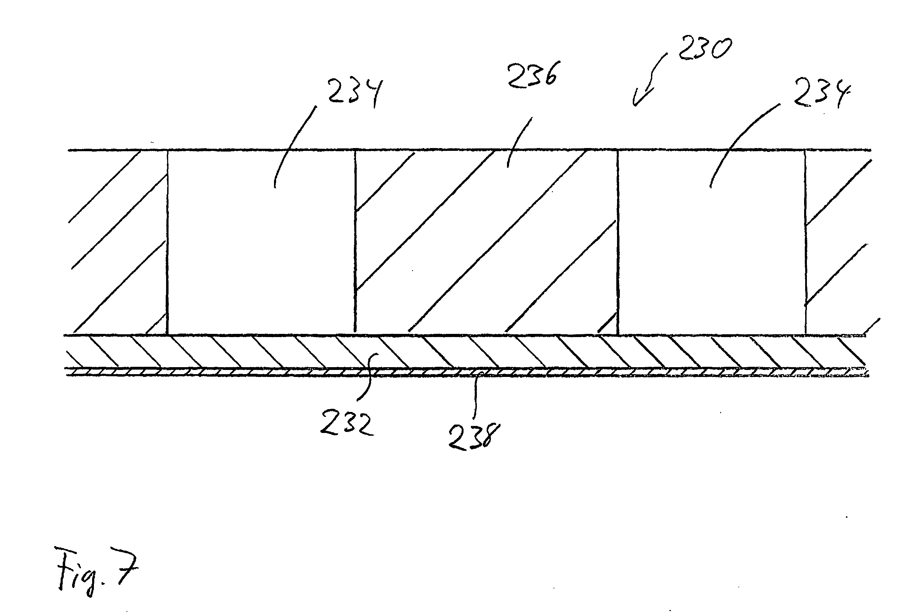

Fig. 7 zeigt noch ein Beispiel eines im Zusammenhang mit einer erfindungsgemäßen Objektuntersuchungseinrichtung vorteilhaft verwendbaren Objektträgers, nämlich einer so genannten Mikrotiterplatte 230. Die Mikrotiterplatte weist einen Glasboden 232 und eine eine Mehrzahl, insbesondere eine Vielzahl von Aufnahmegefäßen bzw. Wells 234 definierende Wellbegrenzungsplatte 236 auf. Auf der Unterseite der Trägerplatte 232 ist eine dielektrische Beschichtung 283 vorgesehen, die auf die Laserlicht-Wellenlänge einer zugeordneten Scharfstell- oder Autofokus-Anordnung nach der Erfindung, ggf. eines Autofokussensors wie vorstehend beschrieben, abgestimmt ist, um eine hinreichende Laserlichtreflexion zu gewährleisten. Anstelle einer einzelnen dielektrischen Schicht 238 könnte auch ein dielektrisches Schichtensystem vorgesehen sein. Anstelle einer Anordnung der dielektrischen Schicht 238 bzw. eines dielektrischen Schichtensystems auf der Unterseite der Trägerplatte 232 könnte die dielektrische Schicht 238 bzw. ein dielektrisches Schichtensystem auch auf der Oberseite der Trägerplatte 232 aufgebracht worden sein, bevor die Wellbegrenzungsplatte 236 angebracht, beispielsweise aufgeklebt wird. Die dielektrische Schicht bzw. das dielektrische Schichtsystem ist dann besser gegen mechanische Einwirkungen, etwa Kratzer, geschützt. Für manche Situationen mag auch eine andersartige Verspiegelung, etwa metallische Verspiegelung, ausreichen.

Es soll im Folgenden eine andere Anwendung einer erfindungsgemäßen Scharfstell- oder Autofokus-Anordnung 120, etwa des vorstehend im Detail erläuterten Autofokussensors 120 bzw. 120' bzw. 120", beschrieben werden, nämlich die Erfassung und Vermessung von Schichten, insbesondere von biologischen Schichten. Von Interesse sind beispielsweise Schichten oder Filme aus biologischen Substanzen, welche sich auf einem Trägermaterial befinden. Typische Beispiele sind Zahnbeläge oder Beläge auf den Innenoberflächen von Röhren in einem Heiz- oder Kühlsystem. Es ist von Interesse, die Schichtung und die Dicken der einzelnen Schichten auf möglichst einfache Weise zu messen. Die erfindungsgemäße Scharfstell- oder Autofokus-Anordnung ist dafür geeignet, schon geringe Brechungsindexunterschiede zu detektieren. Da Schichten interessierender Schichtsysteme in der Regel einen leicht unterschiedlichen Brechungsindex aufweisen und gegenüber dem Trägermaterial in der Regel sogar einen großen Brechungsunterschied, kann man die Scharfstell- oder Autofokus-Anordnung nacheinander auf die jeweiligen Grenzflächen scharfstellen bzw. fokussieren bzw. einen entsprechenden Scharfstell- bzw. Fokussierungs-Scan durchführen, um nacheinander alle Grenzflächen zu ermitteln bzw. zu erfassen. Zu jeder Grenzfläche gehört dann ein Z'-Wert für den Aktuator 146, wenn man die entsprechende Schichtenmessung unter Verwendung der Anordnung der Fig. 3 durchführt. Aus den Z'-Werten lassen sich die optischen Dicken und ggf. auch die geometrischen Dicken der einzelnen Schichten bestimmen. Auf einen Beobachtungsstrahlengang bzw. Mikroskopstrahlengang 102 entsprechend der Anordnung der Fig. 3 kann für die Durchführung derartiger Messungen grundsätzlich verzichtet werden. In der Regel wird es aber doch zweckmäßig sein, zusätzlich eine Sichtkontrolle bzw. fluoreszenzmikroskopische Erfassung des interessierenden Schichtensystems vorzusehen. Die Anordnung der Fig. 3 ist insoweit durchaus ein zweckmäßiges Ausführungsbeispiel für eine optische Einrichtung zum Erfassen oder/und Untersuchen von Schichten nach der Erfindung. Beispielsweise kann man vorsehen, dass ausgehend von einer Fokussierung bzw. Scharfstellung auf eine durch eine Grenzfläche des Schichtenträgers definierte Referenzebene die Optik 148 weiter verstellt wird, um nacheinander auf die Grenzflächen zwischen den Schichten des Schichtensystems bzw. - wenn nicht mit der Referenzebene zusammenfallend - auf die Grenzschicht zwischen der untersten Schicht und dem Schichtenträger scharfzustellen bzw. zu fokussieren. Soweit auch eine mikroskopische Untersuchung der Schichten von Interesse ist, kann auf Grundlage der jeweiligen Scharfstellung bzw. Fokussierung des Autofokussensors auf die jeweilige Grenzfläche der Mikroskopstrahlengang 102 ohne wesentlichen Einstellaufwand unmittelbar entsprechend scharf gestellt werden.

Für viele Anwendungen wird es zweckmäßig sein, die interessierenden Schichten, ggf. Bioschichten, vor der Messung mit Fluoreszenzfarbstoffen zu behandeln, um auch eine fluoreszenzmikroskopische Untersuchung durchführen zu können, die dann ggf. ähnlich einem konfokalen Mikroskop durchgeführt werden kann, ggf. aber unter Verzicht auf eine komplexe Rasterung in der Ebene.

Generell sei noch angemerkt, dass eine erfindungsgemäße Scharfstell- oder Autofokus-Anordnung auch im Zusammenhang mit konfokalen Mikroskopen bzw. so genannten Laserscan-Mikroskopen vorteilhaft zum Einsatz kommen kann.

**Patentansprüche**

1. Optische Objektuntersuchungseinrichtung, umfassend:

   - einen Objektbereich, in dem ein zu untersuchendes Objekt oder ein Objektträger (110; 230) mit wenigstens einem zu untersuchenden Objekt (O) plazierbar ist;
   - einen Beobachtungsstrahlengang (102; 62), der vom Objektbereich zu einem Bild- oder Beobachtungsbereich (74) führt und hinsichtlich des Abstands wenigstens eines optischen Elements (104) relativ zu einer Bezugsebene des Objektbereichs oder/und relativ zu einem anderen optischen Element verstellbar ist,
   - in der Regel wenigstens einen Beleuchtungsstrahlengang (80, 82, 100), über den der Objektbereich beleuchtbar ist; und
   - eine dem Beobachtungsstrahlengang zugeordnete, auf Grundlage wenigstens eines in Richtung zum Objektbereich gerichteten, zumindest wenigstens ein von einer Verstellung des Beobachtungsstrahfengangs betroffenes optisches Element (104) passierenden Laserstrahls betreibbare automatische Scharfstell- oder Autofokus-Anordnung (120; 120'; 120''), die wenigstens ein sich auf eine Verstellung oder Bezugseinstetung oder momentane Einstellung des Beobachtungsstrahlengangs beziehendes, insbesondere von einer momentanen Einstellung des Beobachtungsstrahlengangs abhängiges Signal ($\Delta Z'$) bereitstellt;

   wobei die automatische Scharfstell- oder Autofokus-Anordnung einen den Laserstrahl führenden und das von einer Verstellung des Beobachtungsstrahlengangs betroffene optische Element (104) umfassenden Messstrahlengang (150) aufweist, der von einer Laserlichtquelle (140) oder einem Laserlichteingang ausgeht und zum Objektbereich und von diesem zu einer Detektoranordnung (166, 170) führt;
   wobei der Messstrahlengang (150) mittels einer zugeordneten Aktuatoranordnung (146) unabhängig vom Beobachtungsstrahlengang (102) hinsichtlich des Abstands wenigstens eines nicht dem Beobachtungsstrahlengang zugehörigen optischen Elements (148) relativ zu einer Bezugsebene des Objektbereichs oder/und relativ zu einem anderen optischen Element verstellbar ist, um eine von einer Fokussierung oder Scharfeinstellung des Beobachtungsstrahlengangs (102) unabhängige Fokussierung oder Scharfeinstellung des Messstrahlengangs (150) zu ermöglichen,
   mit einer Steuer/Regel-Einheit (180), die wenigstens ein Signal von der Detektoranordnung (166, 170) empfängt und vermittels der die Aktuatoranordnung (146) des Messstrahlengangs (150) ansteuerbar ist,
   **dadurch gekennzeichnet, dass** die Steuer-/Regel-Einheit (180) dafür vorgesehen ist, auf Grundlage des wenigstens einen Signals von der Detektoranordnung (166, 170) automatisch den Messstrahlengang (150) durch Ansteuerung der diesem zugeordneten Aktuatoranordnung (146) zu fokussieren oder scharf zu stellen, unabhängig vom Beobachtungstrahlengang.

2. Objektuntersuchungseinrichtung nach Anspruch 1, **dadurch gekennzeichnet dass** ein von der Laserlichtquelle (140) bzw. dem Laserlichteingang zum Objektbereich führender Hin-Abschnitt des Messstrahlengangs (150) und ein vom Objektbereich zur Detektoranordnung führender Rück-Abschnitt des Messstrahlengangs (150) zumindest teilweise zusammenfallen.

3. Objektuntersuchungseinrichtung nach Anspruch 2, **dadurch gekennzeichnet, dass** das von einer Verstellung des Beobachtungsstrahlengangs (104) betroffene optische Element sowohl dem Hin-Abschnitt als auch dem Rück-Abschnitt zugehörig ist.

4. Objektuntersuchungseinrichtung nach Anspruch 2 oder 3, **dadurch gekennzeichnet, dass** das von einer Verstellung des Messstrahlengangs betroffene optische Element (148) sowohl dem Hin-Abschnitt als auch dem Rück-Abschnitt zugehörig ist.

5. Objektuntersuchungseinrichtung nach einem der Ansprüche 1 bis 4, **dadurch gekennzeichnet, dass** der Beobachtungsstrahlengang (102) als Mikroskopstrahlengang (102) ausgeführt ist.

6. Objektuntersuchungseinrichtung nach einem der Ansprüche 1 bis 5, **dadurch gekennzeichnet, dass** der Messstrahlengang (150) einen Mikroskopstrahlengang (152) aufweist.

7. Objektuntersuchungseinrichtung nach Anspruch 6, **dadurch gekennzeichnet, dass** der Mikroskopstrahlengang (152) des Messstrahlengangs (150) sich an den als Mikroskopstrahlengang ausgeführten Beobachtungsstrahlengang (102) anschließt oder in diesen übergeht und entgegengesetzt zu diesem gerichtet ist.

8. Objektuntersuchungseinrichtung nach einem der Ansprüche 1 bis 7, **dadurch gekennzeichnet, dass** die Scharfstell- oder Autofokus-Anordnung (120; 120', 120") dafür ausgebildet ist, mittels der Aktuatoranordnung (146) den Messstrahlengang (150) derart zu verstellen, dass der Laserstrahl auf eine im Objektbereich angeordnete reflektierende Oberfläche oder Grenzfläche (R R') fokussiert oder abgebildet wird.

9. Objektuntersuchungseinrichtung nach einem der Ansprüche 1 bis 8, **dadurch gekennzeichnet, dass** die Scharfstell- oder Autofokus-Anordnung (120; 120', 120'') dafür ausgebildet ist, mittels der Aktuatoranordnung (146) eine Bildebene oder Zwischenbildebene ($ZB_2$) des Messstrahlengangs (150) und eine der reflektierenden Oberfläche oder Grenzfläche (R, R') zugeordnete Bildebene oder Zwischenbildebene (ZB) des Beobachtungsstrahlengangs (102) in Übereinstimmung zu bringen.

10. Objektuntersuchungseinrichtung nach einem der Ansprüche 1 bis 9, **dadurch gekennzeichnet, dass** die Scharfstell- oder Autofokus-Anordnung (120) astigmatisches Laserlicht verwendet und die Detektoranordnung wenigstens einen ortsempfindlichen Detektor, insbesondere eine Quadranten-Photodiode (166), aufweist, um eine Scharfstellung bzw. Autofokussierung auf Grundlage zweier in Propagationsrichtung im Abstand voneinander auftretenden linien- oder ellipsenförmigen Laserlicht-Intensitätsmustern, die den zueinander orthogonalen Bildlinien oder Fokuslinien einer astigmatischen Abbildung entsprechen, und eines zwischen diesen Intensitätsmustern auftretenden punkt- oder kreisförmigen Laserlicht-Intensitätsrnusters, das dem Zerstreuungskreis zwischen den zueinander orthogonalen Bildlinien oder Fokustinien einer astigmatischen Abbildung entspricht, vorzusehen.

11. Objektuntersuchungseinrichtung nach Anspruch 10, **dadurch gekennzeichnet, dass** der Messstrahlengang (150) wenigstens eine Zylinderlinse (164) aufweist, um dem Laserlicht einen Astigmatismus zu verleihen oder einen Astigmatismus des Laserlichts zu verstärken.

12. Objektuntersuchungseinrichtung nach Anspruch 10 oder 11, **gekennzeichnet durch** eine astigmatische Laserlichtquelle (140).

13. Objektuntersuchungseinrichtung nach einem der Ansprüche 1 bis 12, **dadurch gekennzeichnet, dass** die das wenigstens eine Signal von der Detektoranordnung (166, 170) empfangende Steuer-/Regel-Einheit (180) mit wenigstens einem Detektor (166) der Detektoranordnung und der dem Messstrahlengang (150) zugeordneten Aktuatoranordnung (146) einen Regelkreis bildet.

14. Objektuntersuchungseinrichtung nach einem der Ansprüche 1 bis 13, **dadurch gekennzeichnet, dass** die Steuer-/ Regel-Einheit (180) eine Suchfunktionalität zum Suchen einer einer Fokussierung oder Scharfstelleinstellung entsprechenden Einstellung des Messstrahlengangs (150) aufweist.

15. Objektuntersuchungseinrichtung nach Anspruch 14, **dadurch gekennzeichnet, dass** Suchfunktionalität eine Einstellung des Messstrahlengangs (150) sucht, die einer Fokussierung oder Scharfstelleinstellung des Messstrahlengangs in Bezug auf eine Laserlicht reflektierende Schicht oder Grenzfläche (R, R') im Objektbereich entspricht.

16. Objektuntersuchungseinrichtung nach Anspruch 14 oder 15, **dadurch gekennzeichnet, dass** die Suchfunktionalität eine Diskriminierungsfunktionalität auf Grundlage wenigstens eines für eine Gesamtintensität des in die Detektoranordnung (166, 170) einfallenden Laserlichts repräsentativen Signals umfasst.

17. Objektuntersuchungseinrichtung nach einem der Ansprüche 1 bis 16, **dadurch gekennzeichnet, dass** die Detektoranordnung wenigstens einen Intensitätsdetektor (170) aufweist, der eine für die Gesamtintensität des in die Detektoranordnung einfallenden Laserlichts repräsentative Laserlichtintensität erfasst, wobei der Intensitätsdetektor das Laserlicht vorzugsweise über einen Raumfilter (172) empfängt.

18. Objektuntersuchungseinrichtung nach einem der Ansprüche 1 bis 17, **dadurch gekennzeichnet, dass** eine modulierbare Laserlichtquelle oder eine der Laserlichtquelle oder dem Laserlichteingang nachgeschaltete Modulatoranordnung vorgesehen ist, und dass der Detektoranordnung wenigstens eine phasenempfindliche Auswerte- oder Verstärkungsschaltung zugeordnet ist, um eine phasenempfindliche Detektion auf Grundlage modulierten Laserlichts vorzusehen.

**19.** Objektuntersuchungseinrichtung nach einem der Ansprüche 1 bis 18, **dadurch gekennzeichnet, dass** dem Beobachtungsstrahlengang (102) eine Aktuatoranordnung (107) zugeordnet ist, mittels der auf Grundlage wenigstens eines Signals ($\Delta Z'$) der Scharfstell- oder Autofokus-Anordnung (120) der Beobachtungsstrahlengang derart einstellbar ist, dass eine ausgewählte Objektebene (64) scharf abbildet wird.

**20.** Objektuntersuchungseinrichtung nach Anspruch 19, **dadurch gekennzeichnet, dass** die scharf abzubildende Objektebene (64) bezogen auf eine Referenzebene (R, R') der Scharfstell- oder Autofokus-Anordnung (120) mit definiertem Abstand zu dieser auswählbar ist.

**21.** Objektuntersuchungseinrichtung nach Anspruch 20, **dadurch gekennzeichnet, dass** eine im Objektbereich angeordnete reflektierende Oberfläche oder Grenzfläche, auf die der Laserstrahl fokussiert oder abgebildet wird, die Referenzebene (R, R') bildet.

**22.** Objektuntersuchungseinrichtung nach einem der Ansprüche 19 bis 21, **dadurch gekennzeichnet, dass** die Steuer-/ Regeleinheit (190) dafür ausgebildet ist, auf Grundlage wenigstens einen Signals ($\Delta Z'$) der Scharfstell- oder Autofokus-Anordnung (120) und wenigstens eines Auswahlsignals ($k\Delta Z_{Obj}$), das vorzugsweise einen Soll-Abstand der scharf abzubildenden Objektebene zur Referenzebene (R, R') repräsentiert, die Aktuatoranordnung (107) des Beobachtungsstrahlengangs (102) anzusteuern.

**23.** Objektuntersuchungseinrichtung nach einem der Ansprüche 19 bis 22, **gekennzeichnet durch** eine auf digitaler Bildverarbeitung beruhende Scharfstell- oder Autofokus-Funktionalität, die ein im Bildbereich erfasstes digitales Bild auswertet und **durch** Verstellung des Beobachtungsstrahlengangs vermittels der Aktuatoranordnung (107), vorzugsweise **durch** Vorgabe eines entsprechenden Auswahlsignals ($k\Delta Z_{Obj}$) bzw. Änderung des Auswahlsignals, eine aus der digitalen Bildverarbeitung ermittelte Ziel-Objektebene scharf abbildet oder den Beobachtungsstrahlengang in Richtung einer scharfen Abbildung einer aus der digitalen Bildverarbeitung ermittelten Ziel-Objektebene verstellt.

**24.** Objektuntersuchungseinrichtung nach einem der Ansprüche 19 bis 23, **gekennzeichnet durch** eine auf digitaler Bildverarbeitung beruhende, ggf. der Scharfstell- oder Autofokus-Funktionalität übergeordnete Suchfunktionalität zum Suchen interessierender Objekte oder Objektebenen (64) im Bildbereich zumindest **durch** Verstellung des Beobachtungsstrahlengangs vermittels der Aktuatoranordnung (107), vorzugsweise **durch** Vorgabe eines entsprechenden Auswahlsignals ($k\Delta Z_{Obj}$) bzw. Änderung des Auswahlsignals.

**25.** Objektuntersuchungseinrichtung nach einem der Ansprüche 1 bis 24, **gekennzeichnet durch** ein Verfahrsystem zum automatischen oder automatisierten seitlichen Verfahren eines Objektträgers (110) im Objektbereich relativ zum Beobachtungsstrahlengang (102).

**26.** Objektuntersuchungseinrichtung nach Anspruch 25, **dadurch gekennzeichnet, dass** die Scharfstell- oder Autofokus-Anordnung (120; 120'; 120") dafür ausgebildet ist, mittels der Aktuatoranordnung den Messstrahlengang (150) derart zu verstellen und nachzustellen, dass der Laserstrahl auf eine im Objektbereich angeordnete reflektierende Oberfläche oder Grenzfläche (R, R') des Objektträgers fokussiert oder abgebildet wird und während eines seitlichen Verfahrens des Objektträgers die Fokussierung bzw. Abbildung des Laserstrahls auf die Oberfläche bzw. Grenzfläche aufrechterhalten wird, erforderlichenfalls durch Nachstellung des Messstrahlengangs (150) entsprechend eines Verlaufs der Oberfläche bzw. Grenzfläche.

**27.** Objektuntersuchungseinrichtung nach Anspruch 26, **dadurch gekennzeichnet, dass** eine momentane absolute Abbildungseinstellung des Beobachtungsstrahlengangs (102), die eine im Raum absolut oder relativ zu einer Fixebene der Objektuntersuchungseinrichtung definierte Objektebene (64) scharf abbildet, während des seitlichen Verfahrens des Objektträgers erhalten bleiben kann.

**28.** Objektuntersuchungseinrichtung nach Anspruch 26 oder 27, **dadurch gekennzeichnet, dass** der Beobachtungsstrahlengang (102) mittels einer/der Aktuatoranordnung (107) auf Grundlage wenigstens eines Signals ($\Delta Z'$) der Scharfstell- oder Autofokus-Anordnung (120) automatisch nachstellbar ist, um eine momentane relative Abbildungseinstellung des Beobachtungsstrahlertgangs (102), die eine relativ zur reflektierenden Oberfläche bzw. Grenzfläche (R, R') definierte Objektebene (64) scharf abbildet, während des seitlichen Verfahrens des Objektträgers aufrecht zu erhalten oder nach einem seitlichen Verfahren wieder einzustellen.

29. Objektuntersuchungseinrichtung nach einem der vorhergehenden Ansprüche, mit wenigstens einem Objektträger (110; 230) für wenigstens ein Objekt, vorzugsweise mehrere Objekte, **dadurch gekennzeichnet, dass** der vorzugsweise als Mikrotiterplatte (230) ausgeführte Objektträger an einer Oberfläche oder Grenzfläche zumindest bereichsweise eine Verspiegelung oder - vorzugsweise - an einer Oberfläche oder Grenzfläche zumindest bereichsweise eine das Reflektionsvermögen für das Laserlicht erhöhende dielektrische Beschichtung (238) aufweist.

30. Objektuntersuchungseinrichtung nach Anspruch 29, **dadurch gekennzeichnet, dass** die Beschichtung (238) derart ausgeführt ist, dass sie Beleuchtungslicht aus dem Beleuchtungsstrahlengang oder/und von wenigstens einem Objekt ausgehendes, über den Beobachtungsstrahlengang abzubildendes Beobachtungslicht, beispielsweise Fluoreszenzlicht, mit hohem Transmissionsgrad durchlässt.

31. Objektuntersuchungseinrichtung nach einem der vorhergehenden Ansprüche, zu verwenden als Einrichtung zum Erfassen oder/und Untersuchen von Schichten, die als für optische Strahlung zumindest teilweise durchlässige Schicht gegenüber einer Umgebung oder/und einem Träger oder/und wenigstens einer Nachbarschicht einen Brechzahlsprung aufweisen oder/und für optische Strahlung reflektierend sind;
wobei Scharfstell- oder Autofokus-Anordnung dafür vorgesehen ist, den Messstrahlengang (150) in Bezug auf eine reflektierende, wenigstens einer Schicht zugeordnete Grenzfläche automatisch zu Fokussieren oder scharf zu stellen.

32. Einrichtung nach Anspruch 31, **dadurch gekennzeichnet, dass** die Steuer/Regel-Einheit (180) eine Suchfunktionalität zum Suchen einer Einstellung des Messstrahlengangs (150), die einer Fokussierung oder Scharfstetleinstellung des Messstrahlengangs in Bezug auf eine Laserlicht reflektierende Schicht oder Grenzfläche im Objektbereich entspricht, aufweist.

33. Einrichtung nach Anspruch 32, **dadurch gekennzeichnet, dass** die Suchfunktionalität dafür ausgeführt ist, einen Suchscan über einen vorgegebenen oder vorgebbaren Abstandsbereich auszuführen, um im Abstandsbereich vorhandene Schichten zu erfassen und vorzugsweise zumindest hinsichtlich ihrer optischen oder/und geometrischen Dicke zu vermessen.

34. Verfahren zur Untersuchung wenigstens eines Objekts, insbesondere wenigstens eines biologischen Objekts, unter Verwendung einer Objektuntersuchungseinrichtung (100) nach einem der Ansprüche 1 bis 33,
bei dem zuerst der Messstrahlengang (150) in Bezug auf eine Laserlicht reflektierende Schicht oder Grenzfläche (R, R') im Objektbereich scharfgestellt oder fokussiert wird, unabhängig von dem Beobachtungsstrahlengang (102), und
bei dem dann auf Grundlage der Scharfstellung bzw. Fokussierung des Messstrahlengangs (150) der Beobachtungsstrahlengang (102) bezogen auf eine Objektebene (64) im Objektbereich, die relativ zu einer durch die Scharfstellung bzw. Fokussierung des Messstrahlengangs (150) definierten Referenzebene (R, R') im Objektbereich definiert ist, scharfgestellt oder fokussiert wird, erforderlichenfalls unter Nachstellung des Messstrahlengangs (152) zum Erhalt der Scharfstellung oder Fokussierung in Bezug auf die Laserlicht reflektierende Schicht oder Grenzfläche (R, R') im Objektbereich.

35. Verfahren zur Erfassung oder/und Untersuchung wenigstens einer Schicht, gegebenenfalls einer aus biologischem Material oder/und in Folge biologischer Vorgänge gebildeten Schicht, auf einem Schichtenträger, unter Verwendung einer Einrichtung (100) nach einem der Ansprüche 31 bis 33, gewünschtenfalls in Verbindung mit dem Verfahren nach Anspruch 34,
bei dem eine Einstellung des bei dem Messstrahlengangs (150), die einer Fokussierung oder Scharfstelleinstellung des Messstrahlengangs in Bezug auf eine Laserlicht reflektierende Schicht oder Grenzfläche im Objektbereich entspricht, gesucht wird, und bei dem ein Suchscan über einen vorgegebenen oder vorgebbaren Abstandsbereich ausgeführt wird, um im Abstandsbereich vorhandene Schichten zu erfassen und zumindest hinsichtlich ihrer optischen oder/und geometrischen Dicke zu vermessen.

**Claims**

1. An optical specimen investigation device, comprising:

- a specimen area, in which a specimen to be investigated or a specimen holder (110; 230) with at least one specimen (0) to be investigated may be placed;
- an observation beam path (102; 62), which leads from the specimen area to an image or observation area (74) and is adjustable with regard to the distance of at least one optical element (104) relative to a datum plane of the specimen area and/or relative to another optical element,
- as a rule at least one illumination beam path (80, 82, 100), via which the specimen area may be illuminated; and
- an automatic focusing or autofocus arrangement (120; 120'; 120") assigned to the observation beam path and operable on the basis of at least one laser beam oriented in the direction of the specimen area and at least passing through at least one optical element (104) affected by an adjustment of the observation beam path, which arrangement (120; 120'; 120") provides at least one signal ($\Delta Z'$) relating to an adjustment or reference setting or instantaneous setting of the observation beam path and dependent in particular on an instantaneous setting of the observation beam path;

the automatic focusing or autofocus arrangement comprising a measurement beam path (150) which guides the laser beam and includes the optical element (104) affected by an adjustment of the observation beam path, which measurement beam path (150) starts from a laser light source (140) or a laser light input and leads to the specimen area and thence to a detector arrangement (166, 170);

the measurement beam path (150) being adjustable by means of an assigned actuator arrangement (146) independently of the observation beam path (102) with regard to the distance of at least one optical element (148) not belonging to the observation beam path relative to a datum plane of the specimen area and/or relative to another optical element, in order to allow focusing of the measurement beam path (150) independently of focusing of the observation beam path (102),

having an open/closed loop control unit (180), which receives at least one signal from the detector arrangement (166, 170) and by means of which the actuator arrangement (146) of the measurement beam path (150) may be driven,

**characterised in that** the open/closed loop control unit (180) is provided in order automatically to focus the measurement beam path (150), by driving the actuator arrangement (146) assigned thereto, on the basis of the at least one signal from the detector arrangement (166, 170), independently of the observation beam path.

2. A specimen investigation device according to claim 1, **characterised in that** an outward portion of the measurement beam path (150) leading from the laser light source (140) or the laser light input to the specimen area and a return portion of the measurement beam path (150) leading from the specimen area to the detector arrangement coincide at least partially.

3. A specimen investigation device according to claim 2, **characterised in that** the optical element affected by an adjustment of the observation beam path (104) belongs both to the outward portion and the return portion.

4. A specimen investigation device according to claim 2 or claim 3, **characterised in that** the optical element (148) affected by an adjustment of the measurement beam path belongs both to the outward portion and the return portion.

5. A specimen investigation device according to any one of claims 1 to 4, **characterised in that** the observation beam path (102) takes the form of a microscope beam path (102).

6. A specimen investigation device according to any one of claims 1 to 5, **characterised in that** the measurement beam path (150) comprises a microscope beam path (152).

7. A specimen investigation device according to claim 6, **characterised in that** the microscope beam path (152) of the measurement beam path (150) adjoins the observation beam path (102) which takes the form of a microscope beam path or merges therewith and is oriented in the opposite direction thereto.

8. A specimen investigation device according to any one of claims 1 to 7, **characterised in that** the focusing or autofocus arrangement (120; 120', 120") is designed to adjust the measurement beam path (150) by means of the actuator arrangement (146) in such a way that the laser beam is focused or imaged onto a reflective surface or boundary surface (R, R') arranged in the specimen area.

9. A specimen investigation device according to any one of claims 1 to 8, **characterised in that** the focusing or autofocus arrangement (120; 120', 120") is designed to cause an image plane or intermediate image plane ($ZB_2$) of the measurement beam path (150) and an image plane or intermediate image plane (ZB), assigned to the reflective surface or boundary surface (R, R'), of the observation beam path (102), to coincide by means of the actuator arrangement (146).

10. A specimen investigation device according to any one of claims 1 to 9, **characterised in that** the focusing or autofocus arrangement (120) uses astigmatic laser light and the detector arrangement comprises at least one position-sensitive detector, in particular a quadrant photodiode (166), in order to provide focusing or autofocusing on the basis of two linear or elliptical laser light intensity patterns arising at a distance from one another in the propagation direction, which patterns correspond to the mutually orthogonal image lines or focal lines of an astigmatic image, and a punctiform or circular laser light intensity pattern arising between these intensity patterns, which pattern corresponds to the circle of confusion between the mutually orthogonal image lines or focal lines of an astigmatic image.

11. A specimen investigation device according to claim 10, **characterised in that** the measurement beam path (150) comprises at least one cylinder lens (164), in order to lend astigmatism to the laser light or to reinforce astigmatism of the laser light.

12. A specimen investigation device according to claim 10 or 11, **characterised by** an astigmatic laser light source (140).

13. A specimen investigation device according to any one of claims 1 to 12, **characterised in that** the open/closed loop control unit (180) receiving the at least one signal from the detector arrangement (166, 170) forms a control loop with at least one detector (166) of the detector arrangement and the actuator arrangement (146) assigned to the measurement beam path (150).

14. A specimen investigation device according to any one of claims 1 to 13, **characterised in that** the open/closed loop control unit (180) comprises a search functionality for searching for a setting of the measurement beam path (150) corresponding to focusing.

15. A specimen investigation device according to claim 14, **characterised in that** the search functionality searches for a setting of the measurement beam path (150) which corresponds to focusing of the measurement beam path in relation to a laser light-reflecting layer or boundary surface (R, R') in the specimen area.

16. A specimen investigation device according to claim 14 or 15, **characterised in that** the search functionality includes a discrimination functionality on the basis of at least one signal representative of a total intensity of the laser light incident into the detector arrangement (166, 170).

17. A specimen investigation device according to any one of claims 1 to 16, **characterised in that** the detector arrangement comprises at least one intensity detector (170), which detects a laser light intensity representative of the total intensity of the laser light incident into the detector arrangement, wherein the intensity detector receives the laser light preferably via a spatial filter (172).

18. A specimen investigation device according to any one of claims 1 to 17, **characterised in that** there is provided a modulatable laser light source or a modulator arrangement connected downstream of the laser light source or the laser light input, and **in that** at least one phase-sensitive evaluation or amplification circuit is assigned to the detector arrangement in order to provide phase-sensitive detection on the basis of modulated laser light.

19. A specimen investigation device according to any one of claims 1 to 18, **characterised in that** an actuator arrangement (107) is assigned to the observation beam path (102), by means of which actuator arrangement the observation beam path may be adjusted on the basis of at least one signal ($\Delta Z'$) of the focusing or autofocus arrangement (120) in such a way that a selected specimen plane (64) is sharply imaged.

20. A specimen investigation device according to claim 19, **characterised in that** the specimen plane (64) to be sharply imaged may be selected relative to a reference plane (R, R') of the focusing or autofocus arrangement (120) at a defined distance therefrom.

21. A specimen investigation device according to claim 20, **characterised in that** a reflective surface or boundary surface, arranged in the specimen area and onto which the laser beam is focused or imaged, forms the reference plane (R, R').

22. A specimen investigation device according to any one of claims 19 to 21, **characterised in that** the open/closed loop control unit (190) is designed to drive the actuator arrangement (107) of the observation beam path (102) on the basis of at least one signal ($\Delta Z$') of the focusing or autofocus arrangement (120) and at least one selection signal ($k\Delta Z_{Spec}$), which preferably represents a nominal distance between the specimen plane to be sharply imaged and the reference plane (R, R').

23. A specimen investigation device according to any one of claims 19 to 22, **characterised by** a focusing or autofocus functionality based on digital image processing, which evaluates a digital image detected in the image area and, by adjustment of the observation beam path by means of the actuator arrangement (107), preferably by stipulation of a corresponding selection signal ($k\Delta Z_{Spec}$) or modification of the selection signal, sharply images a target specimen plane determined from the digital image processing or adjusts the observation beam path in the direction of sharp imaging of a target specimen plane determined from the digital image processing.

24. A specimen investigation device according to any one of claims 19 to 23, **characterised by** a search functionality, based on digital image processing and optionally higher ranking than the focusing or autofocus functionality, for searching for specimens or specimen planes (64) of interest in the image area at least by adjustment of the observation beam path by means of the actuator arrangement (107), preferably by stipulation of a corresponding selection signal ($k\Delta Z_{Spec}$) or modification of the selection signal.

25. A specimen investigation device according to any one of claims 1 to 24, **characterised by** a displacement system for automatic or automated lateral displacement of a specimen holder (110) in the specimen area relative to the observation beam path (102).

26. A specimen investigation device according to claim 25, **characterised in that** the focusing or autofocus arrangement (120; 120'; 120") is designed to adjust and readjust the measurement beam path (150) by means of the actuator arrangement in such a way that the laser beam is focused or imaged onto a reflective surface or boundary surface (R, R'), arranged in the specimen area, of the specimen holder and focusing or imaging of the laser beam onto the surface or boundary surface is maintained during lateral displacement of the specimen holder, if necessary by readjustment of the measurement beam path (150) in accordance with a profile of the surface or boundary surface.

27. A specimen investigation device according to claim 26, **characterised in that** an instantaneous absolute imaging setting of the observation beam path (102), which sharply images a specimen plane (64) defined spatially absolutely or relative to a fixed plane of the specimen investigation device, may be retained during lateral displacement of the specimen holder.

28. A specimen investigation device according to claim 26 or 27, **characterised in that** the observation beam path (102) may be automatically readjusted by means of an/the actuator arrangement (107) on the basis of at least one signal ($\Delta Z$') of the focusing or autofocus arrangement (120), in order to maintain, or to reset after lateral displacement, an instantaneous relative imaging setting of the observation beam path (102), which sharply images a specimen plane (64) defined relative to the reflective surface or boundary surface (R, R') .

29. A specimen investigation device according to any one of the preceding claims, having at least one specimen holder (110; 230) for at least one specimen, preferably a plurality of specimens, **characterised in that** the specimen holder, preferably in the form of a microtitre plate (230), comprises, on a surface or boundary surface, at least in areas thereof, a mirror coating or preferably, on a surface or boundary surface, at least in areas thereof, a dielectric coating (238) increasing the reflecting power for the laser light.

30. A specimen investigation device according to claim 29, **characterised in that** the coating (238) is such that it transmits with high transmittance illumination light from the illumination beam path and/or observation light, for example fluorescent light, starting from at least one specimen for imaging via the observation beam path.

31. A specimen investigation device according to any one of the preceding claims, for use as an apparatus for detecting and/or investigating layers, which exhibit as the layer which is at least partially pervious to optical radiation a refractive index jump relative to an environment and/or a substrate and/or at least one neighbouring layer and/or are reflecting with regard to optical radiation;
wherein the focusing or autofocus arrangement is provided to focus automatically the measurement beam path (150) in relation to a reflective boundary surface assigned to at least one layer.

**32.** An apparatus according to claim 31, **characterised in that** the open/closed loop control unit (180) comprises a search functionality for searching for a setting of the measurement beam path (150) which corresponds to focusing of the measurement beam path in relation to a laser light-reflecting layer or boundary surface in the specimen area.

**33.** An apparatus according to claim 32, **characterised in that** the search functionality is designed to perform a searching scan over a predetermined or predeterminable distance range, in order to detect layers present in the distance range and preferably to measure them at least with regard to their optical and/or geometric thickness.

**34.** A method of investigating at least one specimen, in particular at least one biological specimen, using a specimen investigation device (100) according to any one of claims 1 to 33, in which first of all the measurement beam path (150) is focused relative to a laser light-reflecting layer or boundary surface (R, R') in the specimen area, independently of the observation beam path (102), and in which, on the basis of the focusing of the measurement beam path (150), the observation beam path (102) is then focused relative to a specimen plane (64) in the specimen area, which plane is defined relative to a reference plane (R, R') in the specimen area defined by the focusing of the measurement beam path (150), if necessary with readjustment of the measurement beam path (152) to obtain focusing relative to the laser light-reflecting layer or boundary surface (R, R') in the specimen area.

**35.** A method of detecting and/or investigating at least one layer, optionally a layer of biological material and/or formed as a consequence of biological processes, on a layer substrate, using a device (100) according to any one of claims 31 to 33, optionally in conjunction with the method according to claim 34, in which a setting of the measurement beam path (150) is searched for, which corresponds to focusing of the measurement beam path relative to a laser light-reflecting layer or boundary surface in the specimen area, and in which a searching scan is performed over a predetermined or predeterminable distance range, in order to detect layers present in the distance range and to measure them at least with regard to their optical and/or geometric thickness.

## Revendications

**1.** Dispositif optique d'examen d'objets, comprenant :

- une zone objet dans laquelle peut être placé un objet à examiner ou un porte-objet (110 ; 230) portant au moins un objet (O) à examiner ;
- un faisceau d'observation (102 ; 62) qui conduit de la zone objet à une zone image ou d'observation (74) et qui peut être ajusté en ce qui concerne la distance d'au moins un élément optique (104) vis-à-vis d'un plan dé référence de la zone objet ou/et vis-à-vis d'un autre élément optique,
- en général au moins un faisceau d'éclairage (80, 82, 100) au moyen duquel la zone objet peut être éclairée ; et
- un dispositif de mise au point ou autofocus automatique (120 ; 120' ; 120"), associé au faisceau d'observation, pouvant être commandé sur la base d'au moins un rayon laser qui traverse au moins un élément optique (104) concerné par un ajustement du faisceau d'observation, dirigé vers la zone objet, qui fournit au moins un signal ($\Delta Z'$) qui se rapporte à un ajustement ou à un réglage de référence, ou un réglage instantané du faisceau d'observation, et qui dépend en particulier d'un réglage momentané du faisceau d'observation ;

dans lequel le dispositif automatique de mise au point ou autofocus présente un faisceau de mesure (150) qui guide le rayon laser et qui comprend l'élément optique (104) concerné par un ajustement du faisceau d'observation, et qui part d'une source de lumière laser (140) ou d'une entrée de lumière laser et conduit à une zone objet, et de là, à un dispositif détecteur (166, 170) ;
dans lequel le faisceau de mesure (150) peut être ajusté au moyen d'un dispositif actionneur correspondant (146) indépendamment du faisceau d'observation (102), en ce qui concerne la distance d'éloignement d'au moins un élément optique (148) qui n'appartient pas au faisceau d'observation par rapport à un plan de référence de la zone objet ou/et par rapport à un autre élément optique, pour permettre une focalisation ou mise au point du faisceau de mesure (150) indépendante d'une focalisation ou mise au point du faisceau d'observation (102), avec une unité de commande/réglage (180) qui reçoit au moins un signal du dispositif détecteur (166, 170) et au moyen duquel le dispositif actionneur (146) du faisceau de mesure (150) peut être commandé, **caractérisé en ce que** l'unité de commande/réglage (180) est prévue pour focaliser ou mettre au point automatiquement le faisceau de mesure (150) sur la base d'au moins un signal du dispositif détecteur (166, 170) par activation du dispositif actionneur (146) associé à ce dernier, indépendamment du faisceau d'observation.

**2.** Dispositif d'examen d'objet selon la revendication 1, **caractérisé en ce qu'**un trajet d'aller du faisceau de mesure (150) qui conduit de la source de lumière laser (140) ou de l'entrée de lumière laser à la zone objet et un trajet de retour du faisceau de mesure (150) qui conduit de la zone objet au dispositif détecteur coïncident au moins partiellement.

**3.** Dispositif d'examen d'objet selon la revendication 2, **caractérisé en ce que** l'élément optique concerné par un ajustement du faisceau d'observation (104) appartient aussi bien au trajet d'aller qu'au trajet de retour.

**4.** Dispositif d'examen d'objet selon la revendication 2 ou 3, **caractérisé en ce** l'élément optique (148) concerné par un ajustement du faisceau de mesure appartient aussi bien au trajet d'aller qu'au trajet de retour.

**5.** Dispositif d'examen d'objet selon l'une des revendications 1 à 4, **caractérisé en ce que** le faisceau d'observation (102) est constitué par un faisceau de microscope (102).

**6.** Dispositif d'examen d'objet selon l'une des revendications 1 à 5, **caractérisé en ce que** le faisceau de mesure (150) présente un faisceau de microscope (152).

**7.** Dispositif d'examen d'objet selon la revendication 6, **caractérisé en ce que** le faisceau de microscope (152) du faisceau de mesure (150) fait suite au faisceau d'observation (102) constitué par un faisceau de microscope, ou se termine dans ce faisceau et est dirigé en sens inverse de celui-ci.

**8.** Dispositif d'examen d'objet selon l'une des revendications 1 à 7, **caractérisé en ce que** le dispositif de mise au point ou autofocus (120 ; 120', 120") est configuré de manière à ajuster le faisceau de mesure (150) au moyen du dispositif actionneur (146) de manière que le faisceau laser soit focalisé ou forme image sur une surface réfléchissante ou surface limite (R, R') disposée dans la zone objet.

**9.** Dispositif d'examen d'objet selon l'une des revendications 1 à 8, **caractérisé en ce que** le dispositif de mise au point ou autofocus (120 ; 120', 120 ") est configuré pour mettre en concordance, au moyen du dispositif actionneur (146), un plan image ou un plan image intermédiaire $(ZB_2)$ du faisceau de mesure (150) et un plan image ou plan intermédiaire (ZB) du faisceau d'observation (102) qui est associé à la surface réfléchissante ou surface limite (R, R').

**10.** Dispositif d'examen d'objet selon l'une des revendications 1 à 9, **caractérisé en ce que** le dispositif de mise au point ou autofocus (120) utilise une lumière laser astigmatique et le dispositif détecteur présente au moins un détecteur sensible à la position, en particulier une photodiode à quadrant (166) pour prévoir une mise au point ou focalisation automatique sur la base de deux figures d'intensité de lumière laser linéaires ou elliptiques qui apparaissent à une certaine distance l'une de l'autre dans la direction de la propagation, figures qui correspondent aux lignes image ou lignes focales d'une formation d'image astigmatique qui sont orthogonales entre elles et d'une figure d'intensité de lumière laser ponctuelle ou circulaire qui apparaît entre ces figures d'intensité, et qui correspond au cercle de diffusion entre les lignes image ou lignes focales orthogonales entre elles d'une formation d'image astigmatique.

**11.** Dispositif d'examen d'objet selon la revendication 10, **caractérisé en ce que** le faisceau de mesure (150) présente au moins une lentille cylindrique (164) pour conférer un astigmatisme à la lumière laser ou pour renforcer un astigmatisme de la lumière laser.

**12.** Dispositif d'examen d'objet selon la revendication 10 ou 11, **caractérisé par** une source de lumière laser astigmatique (140).

**13.** Dispositif d'examen d'objet selon l'une des revendications 1 à 12, **caractérisé en ce que** l'unité de commande/réglage (180) qui reçoit l'au moins un signal en provenance du dispositif détecteur (166, 170) forme un circuit de régulation avec au moins un détecteur (166) du dispositif détecteur et avec le dispositif actionneur (146) associé au faisceau de mesure (150).

**14.** Dispositif d'examen d'objet selon l'une des revendications 1 à 13, **caractérisé en ce que** l'unité de commande/réglage (180) présente une fonctionnalité de recherche pour la recherche d'un réglage du faisceau de mesure (150) qui correspond à une focalisation ou à un réglage de mise au point.

**15.** Dispositif d'examen d'objet selon la revendication 14, **caractérisé en ce que** la fonctionnalité de recherche cherche un réglage du faisceau de mesure (150) qui correspond à une focalisation ou à une mise au point du faisceau de mesure par rapport à une couche ou surface limite (R, R') qui réfléchit la lumière laser, dans la zone objet.

**16.** Dispositif d'examen d'objet selon la revendication 14 ou 15, **caractérisé en ce que** la fonctionnalité de recherche comprend une fonctionnalité de discrimination sur la base d'au moins un signal représentatif d'une intensité totale de la lumière laser qui pénètre dans le dispositif détecteur (166, 170).

**17.** Dispositif d'examen d'objet selon l'une des revendications 1 à 16,
**caractérisé en ce que** le dispositif détecteur présente au moins un détecteur d'intensité (170) qui capte une intensité de lumière laser représentative d'une intensité totale de la lumière laser pénétrant dans le dispositif détecteur, le détecteur d'intensité recevant de préférence la lumière laser par l'intermédiaire d'un filtre spatial (172).

**18.** Dispositif d'examen d'objet selon l'une des revendications 1 à 17, **caractérisé en ce qu'**il est prévu une source de lumière laser modulable ou un dispositif modulateur placé en aval de la source de lumière laser ou de l'entrée de lumière laser et **en ce qu'**au dispositif détecteur est associé au moins un circuit d'analyse ou d'amplification sensible à la phase, pour prévoir une détection sensible à la phase sur la base de la lumière laser modulée.

**19.** Dispositif d'examen d'objet selon l'une des revendications 1 à 18, **caractérisé en qu'**au faisceau d'observation (102) est associé un dispositif actionneur (107) au moyen duquel le faisceau d'observation peut être réglé, sur la base d'au moins un signal (ΔZ') du dispositif de mise au point ou autofocus (120) de telle manière qu'un plan objet sélectionné (64) soit reproduit dans une image nette.

**20.** Dispositif d'examen d'objet selon la revendication 19, **caractérisé en ce que** le plan objet (64) qui doit être reproduit dans une image nette peut être choisi, par rapport à un plan de référence (R, R') du dispositif de mise au point ou autofocus (120), à une distance définie de ce dispositif.

**21.** Dispositif d'examen d'objet selon la revendication 20, **caractérisé en ce qu'**une surface réfléchissante ou surface limite disposée dans la zone objet sur laquelle le rayon laser est focalisé ou est reproduit forme le plan de référence (R, R').

**22.** Dispositif d'examen d'objet selon l'une des revendications 19 à 21, **caractérisé en ce que** l'unité de commande/réglage (190) est conformée de manière à activer le dispositif actionneur (107) du faisceau d'observation (102) sur la base d'au moins un signal (ΔZ') du dispositif de mise au point ou autofocus (120) et d'au moins un signal de sélection (k$\Delta Z_{Obj}$) qui représente de préférence une distance de consigne entre le plan objet à reproduire nettement et le plan de référence (R, R').

**23.** Dispositif d'examen d'objet selon l'une des revendications 19 à 22, **caractérisé par** une fonctionnalité de mise au point ou autofocus reposant sur un traitement numérique de l'image, qui analyse une image numérique détectée dans la zone image et qui, par ajustement du faisceau d'observation au moyen du dispositif actionneur (107), de préférence en choisissant un signal de sélection approprié (k$\Delta Z_{Dbj}$) ou en modifiant le signal de sélection, reproduit dans une image nette un plan objet cible obtenu par le traitement numérique de l'image ou encore ajuste le faisceau d'observation dans le sens qui donnera une reproduction nette d'un plan objet cible obtenu par le traitement numérique de l'image.

**24.** Dispositif d'examen d'objet selon l'une des revendications 19 à 23, **caractérisé par** une fonctionnalité de recherche reposant sur le traitement numérique de l'image, éventuellement de rang supérieur à celui de la fonctionnalité de mise au point ou autofocus, destinée à la recherche d'objets ou de plans objet intéressants (64) dans la zone image, agissant au moins par ajustement du faisceau d'observation au moyen du dispositif actionneur (107), de préférence en choisissant un signal de sélection approprié (k$\Delta Z_{Dbj}$) ou en modifiant le signal de sélection.

**25.** Dispositif d'examen d'objet selon l'une des revendications 1 à 24, **caractérisé par** un système de déplacement pour le déplacement latéral automatique ou automatisé d'un porte-objet (110) dans la zone objet par rapport au faisceau d'observation (102).

**26.** Dispositif d'examen d'objet selon la revendication 25, **caractérisé en ce que** le dispositif de mise au point ou autofocus (120 ; 120' ; 120") est configuré pour ajuster et réajuster le faisceau de mesure (150) au moyen du dispositif actionneur de telle manière que le rayon laser soit focalisé ou reproduit sur une surface réfléchissante ou surface limite (R, R') du porte-objet qui est disposée dans la zone objet, et **en ce que**, pendant un déplacement latéral du porte-objet, la focalisation ou la reproduction du rayon laser sur la surface ou la surface limite est maintenue, si nécessaire par réajustement du faisceau de mesure (150) en fonction du profil de la surface ou de la surface limite.

27. Dispositif d'examen d'objet selon la revendication 26, **caractérisé en ce qu'**un réglage de reproduction absolue momentanée du faisceau d'observation (102) qui reproduit nettement un plan objet (64) défini de façon absolue dans l'espace ou défini relativement à un plan fixe du dispositif d'examen d'objet, peut rester maintenu pendant le déplacement latéral du porte-objet.

28. Dispositif d'examen d'objet selon la revendication 26 ou 27, **caractérisé en ce que** le faisceau d'observation (102) peut être réajusté automatiquement au moyen d'un/du dispositif actionneur (107) sur la base d'au moins un signal (ΔZ') du dispositif de mise au point ou autofocus (120), pour maintenir un réglage de reproduction relatif momentané du faisceau d'observation (102) qui reproduit dans une image nette un plan objet (64) défini par rapport à la surface réfléchissante ou surface limite (R, R') pendant le déplacement latéral du porte-objet, ou pour le rétablir après un déplacement latéral.

29. Dispositif d'examen d'objet selon l'une des revendications précédentes comprenant au moins un porte-objet (110 ; 230) pour au moins un objet, de préférence pour plusieurs objets, **caractérisé en ce que** le porte-objet présente, sur une surface ou surface limite, au moins par endroits, une argenture ou - de préférence - sur une surface ou surface limite, au moins par endroits, un dépôt de couche diélectrique (238) qui renforce le pouvoir réfléchissant pour la lumière laser.

30. Dispositif d'examen d'objet selon la revendication 29, **caractérisé en ce que** le dépôt de couche (238) est réalisé de manière à laisser passer avec un haut degré de transmission une lumière d'éclairage issue du faisceau d'éclairage ou/et une lumière d'observation, par exemple une lumière fluorescente issue d'au moins un objet, qui doit être reproduite par l'intermédiaire du faisceau d'observation.

31. Dispositif d'examen d'objet selon l'une des revendications précédentes, à utiliser comme dispositif pour détecter ou/et examiner des couches qui, en tant que couches au moins partiellement transparente pour le rayonnement optique, présentent un saut d'indice de réfraction par rapport à un environnement et/ou à un support ou/et à au moins une couche adjacente ou/et sont réfléchissantes pour le rayonnement optique ;
le dispositif de mise au point ou autofocus étant prévu pour focaliser ou mettre au point automatiquement le faisceau de mesure (150) par rapport à une surface limite réfléchissante associée à au moins une couche.

32. Dispositif selon la revendication 31, **caractérisé en ce que** l'unité de commande/réglage (180) présente une fonctionnalité de recherche pour chercher un réglage du faisceau de mesure (150) qui correspond à une focalisation ou à un réglage de mise au point du faisceau de mesure par rapport à une couche ou surface limite réfléchissant la lumière laser qui est contenue dans la zone objet.

33. Dispositif selon la revendication 32, **caractérisé en ce que** la fonctionnalité de recherche est réalisée de manière à exécuter un balayage de recherche sur une zone de distance prédéterminée ou pouvant être prédéterminée pour détecter des couches présentes dans la zone de distance et pour mesurer ces couches, de préférence au moins en ce qui concerne leur épaisseur optique ou/et géométrique.

34. Procédé pour examiner un objet, en particulier au moins un objet biologique en utilisant un dispositif d'examen d'objet (100) selon l'une des revendications 1 à 33, dans lequel tout d'abord le faisceau de mesure (150) est mis au point ou focalisé par rapport à une couche ou surface limite (R, R') réfléchissant la lumière laser située dans la zone objet, indépendamment du faisceau d'observation (102), et
dans lequel, ensuite, sur la base de la mise au point ou de la focalisation du faisceau de mesure (150), le faisceau d'observation (102) est défini, mis au point ou focalisé dans la zone objet par rapport à un plan objet (64) situé dans la zone objet, qui est défini par rapport à un plan de référence (R, R') qui est défini par la mise au point ou la focalisation du faisceau de mesure (150), si nécessaire avec réajustement du faisceau de mesure (152) pour obtenir la mise au point ou la focalisation par rapport à la couche réfléchissant la lumière laser ou à la surface limite (R, R') contenue dans la zone objet.

35. Procédé pour détecter et/ou examiner au moins une couche, éventuellement une couche faite de matière biologique et/ou une couche formée à la suite de phénomènes biologiques, sur un support de couche, avec utilisation d'un dispositif (100) selon l'une des revendications 31 à 33, de préférence en combinaison avec le procédé selon la revendication 34,

dans lequel est recherché un réglage du faisceau de mesure (150) qui correspond à une focalisation ou mise au point du faisceau de mesure par rapport à une couche ou surface limite réfléchissant la lumière laser située dans la zone objet, et

dans lequel un balayage explorateur est exécuté sur un intervalle de distance prédéterminé ou pouvant être prédéterminé pour détecter des couches présentes dans l'intervalle de distance, et les mesurer en ce qui concerne leur épaisseur optique ou/et géométrique.

Fig. 1

Fig.2

EP 1 543 369 B1

Fig. 3

Fig.4

Fig. 5

EP 1 543 369 B1

Fig. 6    a)

Fig. 7